# EUROPEAN PATENT APPLICATION

(11) **EP 4 443 282 A1**
(43) Date of publication of application: **09.10.2024**
(21) Application number: 23745828.6
(22) Date of filing: 05.01.2023
(51) Int. Cl.: G06F 3/0482

(54) **APPLICATION COMPONENT CONFIGURATION METHOD AND RELATED DEVICE**

(30) Priority: 28.01.2022 CN 202210109640
(71) Applicant: Huawei Technologies Co., Ltd., Shenzhen, Guangdong 518129 (CN)
(72) Inventor: ZHOU, Songle, Shenzhen, Guangdong 518129 (CN); CHEN, Xiaoxiao, Shenzhen, Guangdong 518129 (CN); GU, Bing, Shenzhen, Guangdong 518129 (CN)
(74) Representative: Gill Jennings & Every LLP
(86) International application number: PCT/CN2023/070672
(87) International publication number: WO 2023/142943

(57) **Abstract**

This application discloses an application widget setting method and a related device. An electronic device may combine and arrange a plurality of application widgets (for example, an application widget provided by a local device, and/or an application widget provided by a remote device that establishes a communication connection to the local device) to generate and display a composite application widget. In addition, the electronic device may further run the composite application widget according to preset logic. This can resolve a problem that the plurality of application widgets cannot be effectively connected in series, link with each other, and interact with each other, improve use value of the application widgets, and improve user experience.

## Description

This application claims priority to Chinese Patent Application No. 202210109640.0, filed with the China National Intellectual Property Administration on January 28, 2022 and entitled "APPLICATION WIDGET SETTING METHOD AND RELATED DEVICE", which is incorporated herein by reference in its entirety.

### TECHNICAL FIELD

This application relates to the field of terminal technologies, and in particular, to an application widget setting method and a related device.

### BACKGROUND

With popularization of intelligent electronic devices and development of internet technologies, electronic devices such as smartphones, laptop computers, and tablet computers have become indispensable products in people's daily life. To meet increasing use requirements of users, types and quantities of applications (Applications, APPs) installed on these electronic devices are increasing. Generally, entrances of these applications are displayed on a desktop of the electronic device in a form of desktop icons. In addition to desktop icons, some electronic device manufacturers further provide functions about desktop application widgets currently. These desktop application widgets not only can serve as entrances of applications, but also have characteristics such as clearer vision, freer layout, more flexible dimensions, richer content, and personalized customization compared with conventional applications. Application content can be presented in a lightweight, fast, and efficient manner, and a user can perform a shortcut operation to access a service in one step.

However, currently, a usage scenario of the application widget is limited, use value of the application widget is low, and user experience is poor.

### SUMMARY

Embodiments of this application provide an application widget setting method and a related device, to resolve a problem that a plurality of application widgets cannot be effectively connected in series, link with each other, and interact with each other, improve use value of the application widgets, and improve user experience.

According to a first aspect, an embodiment of this application provides an application widget display method, applied to a first electronic device. The method includes: The first electronic device displays a first user interface, where the first user interface includes a first application widget, and the first application widget is generated by combining at least two application sub-widgets; the first electronic device detects a first event; and when the first event meets a running start condition of a target application sub-widget, the first electronic device triggers the target application sub-widget to start to run, where the target application sub-widget includes at least one of the at least two application sub-widgets.

According to the application widget display method provided in this embodiment of this application, an electronic device may combine and arrange a plurality of application widgets to generate and display a composite application widget. In addition, the electronic device may further run the composite application widget according to preset logic. This improves use value of the application widgets and improves user experience.

With reference to the first aspect, in a possible implementation, the at least two application sub-widgets include a first application sub-widget and a second application sub-widget, the target application sub-widget is the first application sub-widget, and after that the first electronic device triggers the target application sub-widget to start to run, the method further includes: The first electronic device triggers, when the first application sub-widget ends running, the second application sub-widget to start to run.

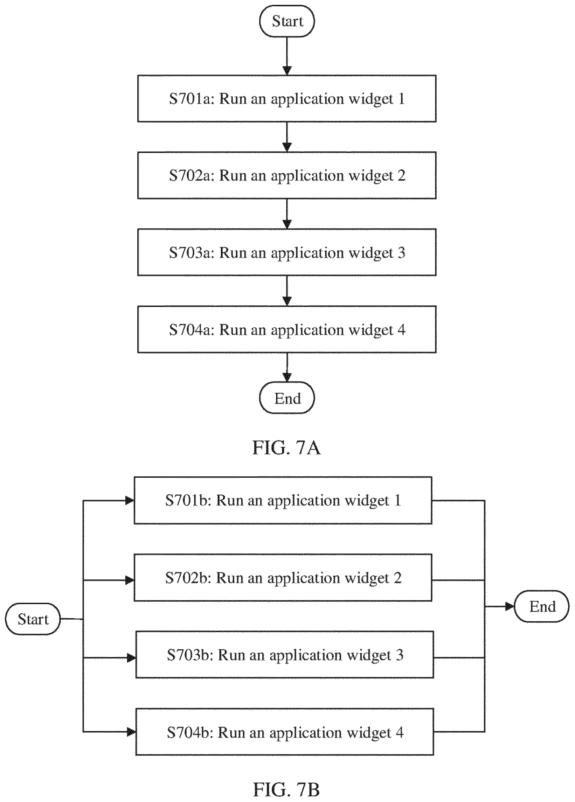

In this way, when the first application sub-widget ends running, the first electronic device may trigger the second application sub-widget to start to run, that is, a synchronous running manner shown in FIG. 7A is used to implement series running of the first application sub-widget and the second application sub-widget.

With reference to the first aspect, in a possible implementation, that the first electronic device triggers, when the first application sub-widget ends running, the second application sub-widget to start to run specifically includes: The first electronic device detects a second event, where the second event is that the first application sub-widget ends running, or the second event is an event that triggers the first application sub-widget to end running; and when the second event meets a running start condition of the second application sub-widget, the first electronic device triggers the second application sub-widget to start to run.

In this way, the serial running of the first application sub-widget and the second application sub-widget may be implemented under two conditions that a running end condition of the first application sub-widget is consistent with the running start condition of the second application sub-widget, or the running start condition of the second application sub-widget is that the first application sub-widget ends running.

With reference to the first aspect, in a possible implementation, before that the first electronic device detects a first event, the method further includes: The first electronic device detects an operation of setting the running start condition of the target application sub-widget by a user, and the first electronic device obtains the running start condition of the target application sub-widget that is set by the user through the first electronic device, and stores the running start condition of the target application sub-widget.

In this way, the user may autonomously set the running start condition of the target application sub-widget on the first electronic device.

With reference to the first aspect, in a possible implementation, the first electronic device displays an eighth user interface, where the eighth user interface includes a first setting option, and the first setting option indicates a type corresponding to the running start condition of the target application sub-widget; the first electronic device detects an operation of the user for the first setting option, and the first electronic device displays a ninth user interface, where the ninth user interface is used by the user to set specific content corresponding to the type of the running start condition of the target application sub-widget; the first electronic device detects an operation of setting the running start condition of the target application sub-widget on the ninth user interface by the user, and the first electronic device stores the running start condition of the target application sub-widget.

In this way, the user may autonomously set the running start condition of the target application sub-widget on the first electronic device.

With reference to the first aspect, in a possible implementation, after that the first electronic device triggers the target application sub-widget to start to run, the method further includes: The first electronic device detects a third event; and when the third event meets a running end condition of the target application sub-widget, the first electronic device triggers the target application sub-widget to end running, where the target application sub-widget includes at least one of the at least two application sub-widgets.

In this way, when the first electronic device detects that the third event meets the running end condition of the target application sub-widget, the first electronic device may trigger the target application sub-widget to stop running.

With reference to the first aspect, in a possible implementation, before that the first electronic device detects a third event, the method further includes: The first electronic device detects an operation of setting the running end condition of the target application sub-widget by the user, and the first electronic device obtains the running end condition of the target application sub-widget that is set by the user through the first electronic device, and stores the running end condition of the target application sub-widget.

In this way, the user may autonomously set the running end condition of the target application sub-widget on the first electronic device.

With reference to the first aspect, in a possible implementation, the first electronic device displays a tenth user interface, where the tenth user interface includes a second setting option, and the second setting option indicates a type corresponding to the running end condition of the target application sub-widget; the first electronic device detects an operation of the user for the second setting option, and the first electronic device displays an eleventh user interface, where the eleventh user interface is used by the user to set specific content corresponding to the type of the running end condition of the target application sub-widget; the first electronic device detects an operation of setting the running end condition of the target application sub-widget on the eleventh user interface by the user, and the first electronic device stores the running end condition of the target application sub-widget.

In this way, the user may autonomously set the running end condition of the target application sub-widget on the first electronic device.

With reference to the first aspect, in a possible implementation, the first application widget is generated after the first electronic device combines and arranges the at least two application sub-widgets based on a preset system template, or the first application widget is generated after the first electronic device detects an operation of combining and arranging the at least two application sub-widgets by the user. The preset system template indicates a relative location relationship between application sub-widgets that are to be combined and arranged.

In this way, the user may select, on the first electronic device, the preset system template to combine and arrange the application widgets, or autonomously combine and arrange the application widgets.

With reference to the first aspect, in a possible implementation, before that the first electronic device displays a first user interface, the method further includes: The first electronic device displays a second user interface, where the second user interface includes one or more preset system templates; and the first electronic device generates the first application widget after combining and arranging the at least two application sub-widgets on the second user interface based on the preset system template, specifically, the first electronic device combines and arranges the at least two application sub-widgets based on one preset system template in the one or more preset system templates; or the first electronic device displays a third user interface; and the first electronic device detects, on the third user interface, an operation of dragging the at least two application sub-widgets by the user to combine and arrange the at least two application sub-widgets, and the first electronic device generates the first application widget; and the first electronic device detects an operation of adding the first application widget to the first user interface by the user, and the first electronic device displays the first application widget on the first user interface.

In this way, the user may select, on the first electronic device, the preset system template to combine and arrange the application widgets, or autonomously combine and arrange the application widgets.

With reference to the first aspect, in a possible implementation, before that the first electronic device displays a second user interface or that the first electronic device displays a third user interface, the method further includes: The first electronic device displays a fourth user interface, where the fourth user interface includes a plurality of application widgets; and the first electronic device detects an operation of selecting at least one application widget in the plurality of application widgets by the user, and the first electronic device displays the second user interface or the third user interface, where the at least two application sub-widgets include the at least one application widget.

In this way, the user may select, on the first electronic device, an application sub-widget that is to be combined and arranged.

With reference to the first aspect, in a possible implementation, before that the first electronic device displays a fourth user interface, the method further includes: The first electronic device displays a fifth user interface; and in a case that the fifth user interface includes a plurality of electronic device options, and the plurality of electronic device options include an option corresponding to the first electronic device and/or options corresponding to one or more second electronic devices, the first electronic device detects an operation of the user for at least one electronic device option in the plurality of electronic device options, and the first electronic device displays the fourth user interface, where the fourth user interface includes an application widget of an electronic device corresponding to the at least one electronic device option; or in a case that the fifth user interface includes one or more application options, the first electronic device detects an operation of the user for at least one application option in the one or more application options, and the first electronic device displays the fourth user interface, where the fourth user interface includes an application widget corresponding to the at least one application option.

The application option is an option corresponding to an application. The application may provide one or more application widgets, and the application widget may provide one or more functions in the application.

In this way, the user may view and select, by tapping a corresponding electronic device option or application option on the first electronic device, an application widget provided by an electronic device or an application.

With reference to the first aspect, in a possible implementation, before that the first electronic device displays a fifth user interface, the method further includes: The first electronic device displays one application sub-widget in the at least two application sub-widgets on the first user interface, detects an operation of performing display setting by the user for the application sub-widget, and the first electronic device displays the fifth user interface. Alternatively, the first electronic device displays an icon of a first application on a desktop; the first electronic device detects an operation of the user for the icon of the first application, and displays one application sub-widget in the at least two application sub-widgets, where the application sub-widget corresponds to the first application; and the first electronic device detects an operation of performing display setting by the user for the application sub-widget, and the first electronic device displays the fifth user interface. Alternatively, the first electronic device detects a swipe up operation of the user on a desktop, and the first electronic device displays a sixth user interface; and the first electronic device detects an operation of triggering application widget display setting on the sixth user interface by the user, and the first electronic device displays the fifth user interface. Alternatively, the first electronic device detects a two-finger pinch operation of the user on a desktop, and the first electronic device displays a seventh user interface; and the first electronic device detects an operation of triggering application widget display setting on the seventh user interface by the user, and the first electronic device displays the fifth user interface. Alternatively, the first electronic device displays the at least two application sub-widgets on the first user interface, the first electronic device detects an operation of combining two application sub-widgets in the at least two application sub-widgets by the user, and the first electronic device displays the fifth user interface.

In this way, the first electronic device may be triggered, in different manners, to display the fifth user interface.

With reference to the first aspect, in a possible implementation, the first application widget is displayed in a first display manner, where the first application widget includes at least two sub-interfaces, and the at least two sub-interfaces are respectively interfaces of the at least two application sub-widgets that are combined and arranged; or the first application widget is displayed in a second display manner, where the first application widget includes icons of one or more applications corresponding to the at least two application sub-widgets, and does not include interfaces of the at least two application sub-widgets that are combined and arranged; or the first application widget is displayed alternately in a first display manner and a second display manner.

In this way, the first application widget may be displayed on the first electronic device in different display manners.

With reference to the first aspect, in a possible implementation, when the first application widget is displayed in the second display manner, the method further includes: When the first electronic device triggers the target application sub-widget to start to run, the first electronic device displays an interface of the target application sub-widget on the first application widget; or the first electronic device displays, on the first application widget, interfaces of the at least two application sub-widgets that are combined and arranged.

In this way, when the target application sub-widget starts to run, the target application sub-widget may be displayed.

With reference to the first aspect, in a possible implementation, all of the at least two application sub-widgets belong to the first electronic device; or all of the at least two application sub-widgets belong to the second electronic device; or some of the at least two application sub-widgets belong to the first electronic device, and some of the at least two application sub-widgets belong to the second electronic device.

In this way, the first application widget may be generated by combining and arranging application widgets of a same electronic device, or may be generated by combining and arranging application widgets of different electronic devices.

With reference to the first aspect, in a possible implementation, when the target application sub-widget is an application widget of the first electronic device, that the first electronic device triggers the target application sub-widget to start to run specifically includes: The first electronic device starts to run the target application sub-widget. Alternatively, when the target application sub-widget is an application widget of the second electronic device, that the first electronic device triggers the target application sub-widget to start to run specifically includes: The first electronic device indicates the second electronic device to start to run the target application sub-widget.

In this way, when the target application sub-widget meets the running start condition, when the target application sub-widget is the application widget of the first electronic device, the first electronic device may directly run the target application sub-widget, and when the target application sub-widget is the application widget of the second electronic device, the first electronic device may indicate the second electronic device to start to run the target application sub-widget.

With reference to the first aspect, in a possible implementation, when the target application sub-widget is the application widget of the first electronic device, that the first electronic device triggers the target application sub-widget to end running specifically includes: The first electronic device ends running of the target application sub-widget. Alternatively, when the target application sub-widget is the application widget of the second electronic device, that the first electronic device triggers the target application sub-widget to end running specifically includes: The first electronic device indicates the second electronic device to end running of the target application sub-widget.

In this way, when the target application sub-widget meets the running end condition, when the target application sub-widget is the application widget of the first electronic device, the first electronic device may directly end running of the target application sub-widget, and when the target application sub-widget is the application widget of the second electronic device, the first electronic device may indicate the second electronic device to end running of the target application sub-widget.

With reference to the first aspect, in a possible implementation, the first user interface is the desktop or a leftmost screen.

In this way, the first application widget may be displayed on a plurality of different user interfaces.

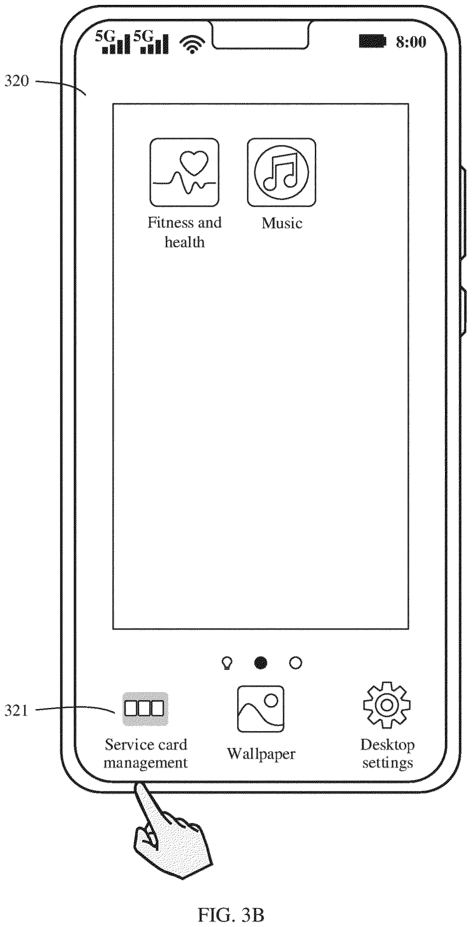

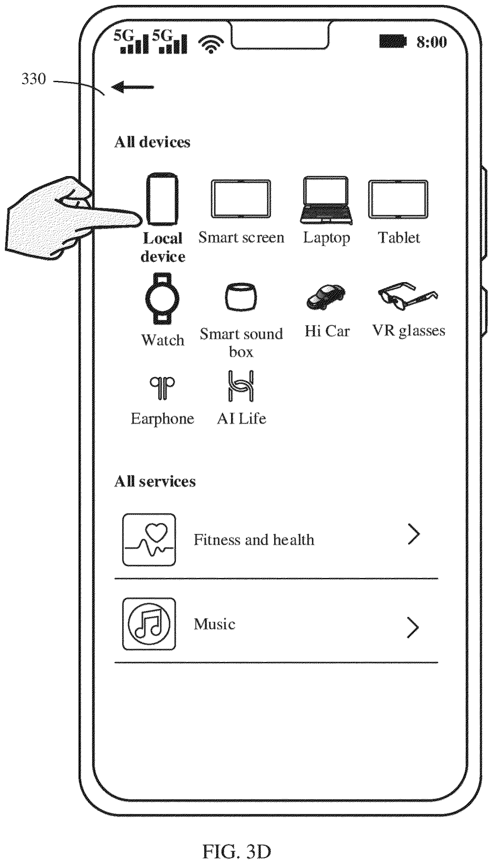

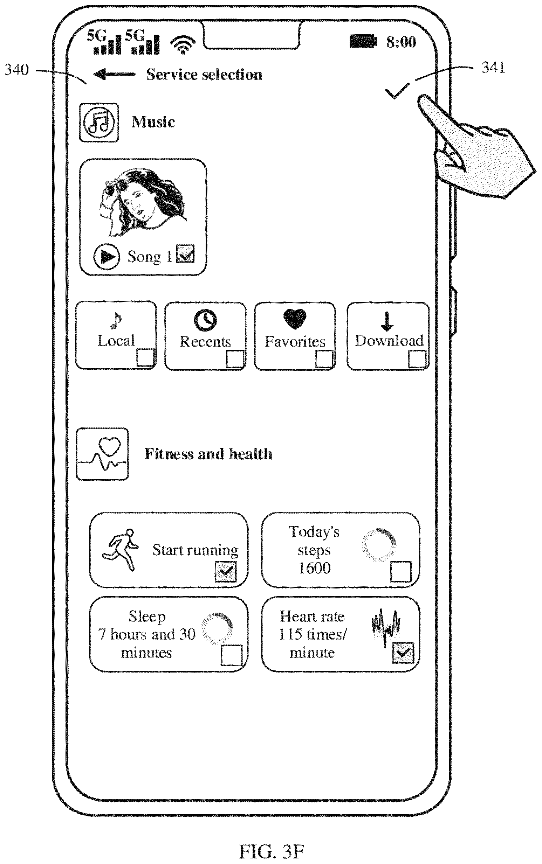

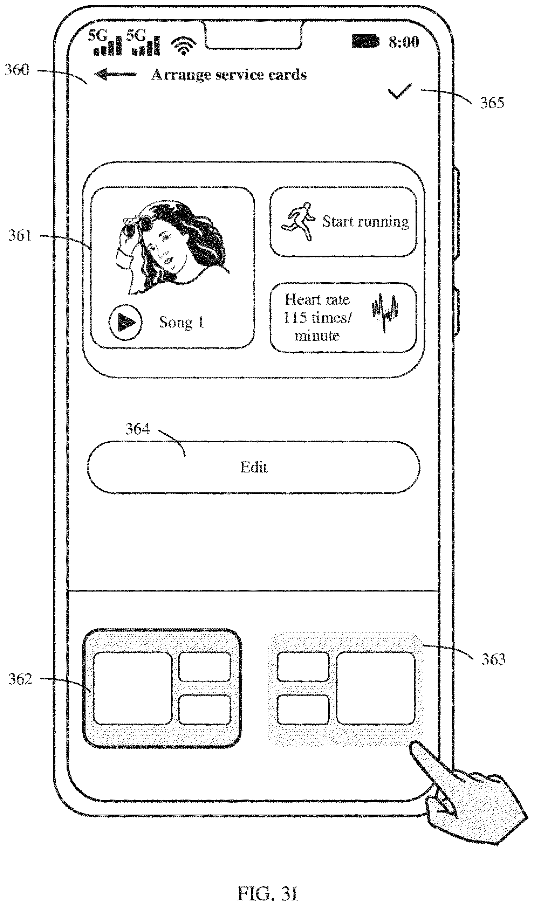

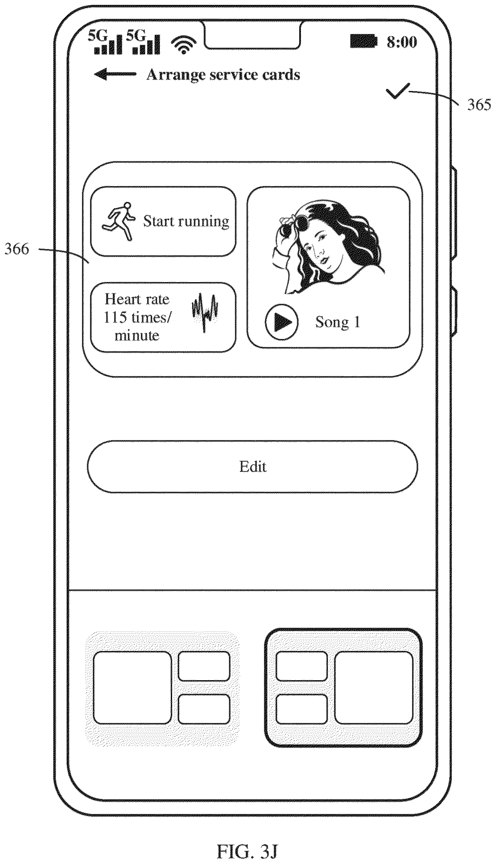

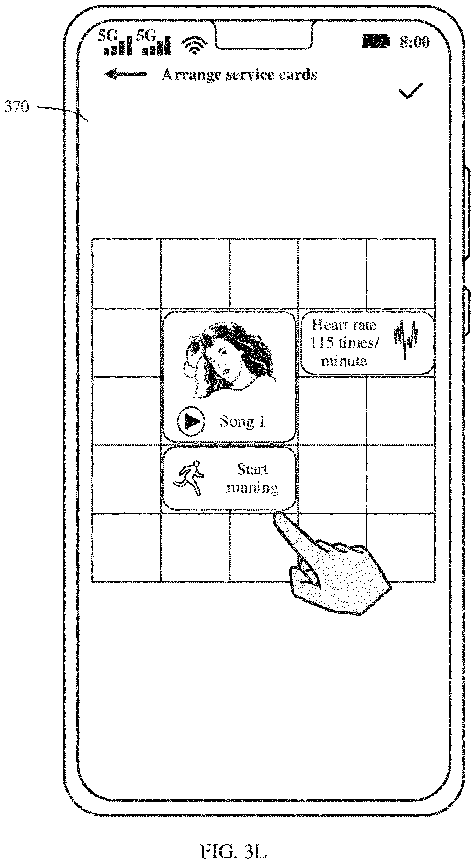

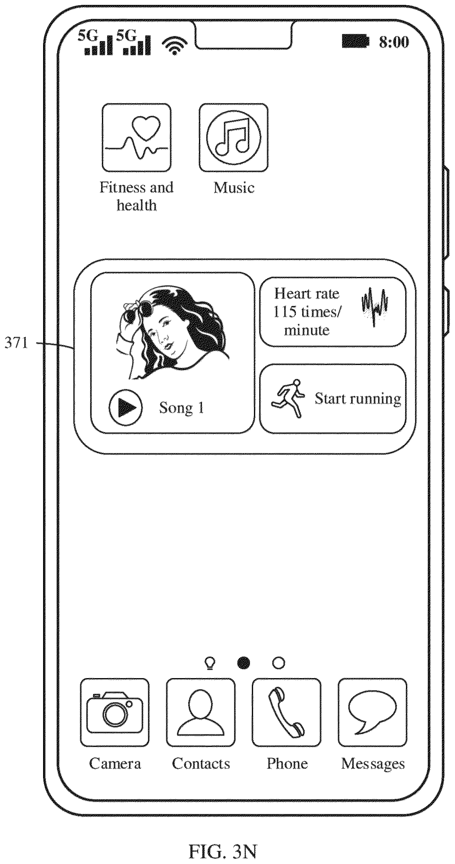

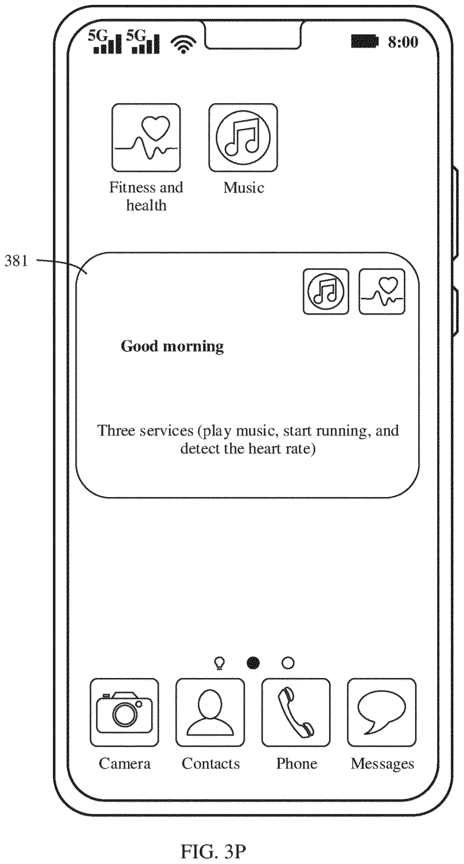

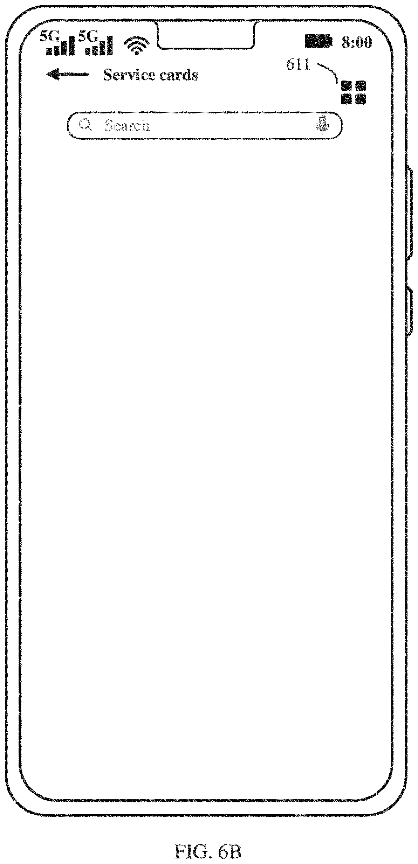

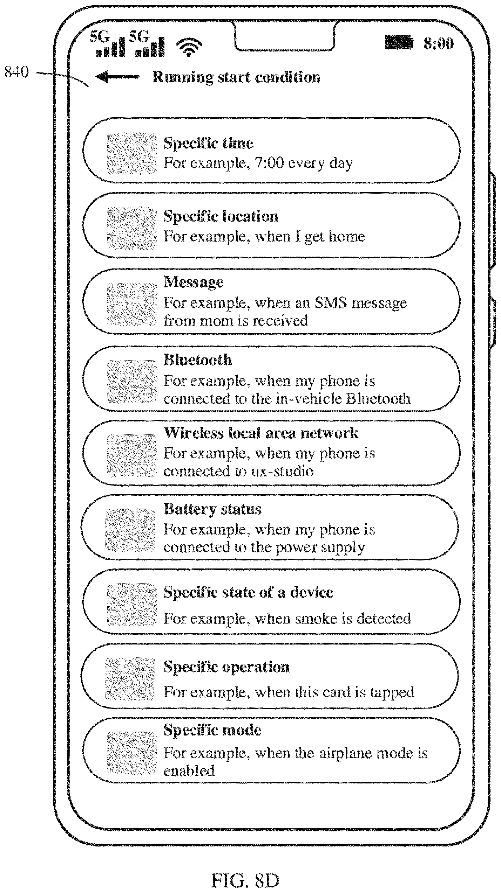

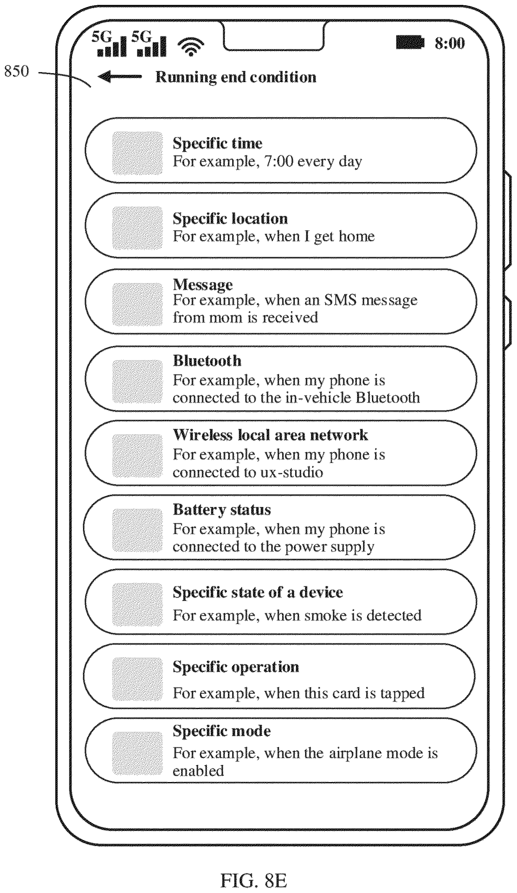

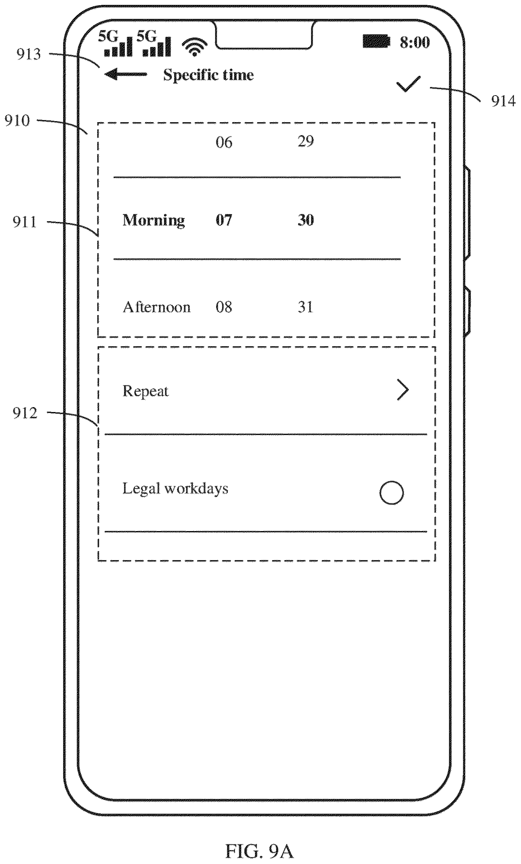

According to the first aspect, the first electronic device may be an electronic device 100. The second electronic device may be an electronic device 200. The first user interface may be the desktop or the leftmost screen of the first electronic device. The first application widget may be an application widget obtained through combining and arranging. The application sub-widgets may be application widgets that are combined and arranged to generate the first application widget. The second user interface may be a user interface shown in FIG. 3I or FIG. 3J. The third user interface may be a user interface shown in FIG. 3L. The fourth user interface may be a user interface shown in FIG. 3F. The fifth user interface may be a user interface shown in FIG. 3D. The sixth user interface may be a user interface shown in FIG. 6B. The seventh user interface may be a user interface shown in FIG. 3B. The first display manner may be a display manner of an application widget 371 shown in FIG. 3N. The sub-interface may be an interface of an application sub-widget (for example, an interface of a "Heart rate" application widget, an interface of a "Song 1" application widget, or an interface of a "Start running" application widget shown in FIG. 3N). The second display manner may be a display manner of an application widget 381 shown in FIG. 3P. The eighth user interface may be a user interface shown in FIG. 8D. The first setting option may be an option shown in FIG. 8D (for example, a specific time option or a specific location option). The ninth user interface may be a user interface (for example, any user interface shown in FIG. 9A to FIG. 9F) displayed after the first setting option is tapped. The tenth user interface may be a user interface shown in FIG. 8E. The second setting option may be an option (for example, a specific time option or a specific location option) shown in FIG. 8E. The eleventh user interface may be a user interface (for example, any user interface shown in FIG. 9A to FIG. 9F) displayed after the second setting option is tapped.

According to a second aspect, an embodiment of this application provides an application widget display method, applied to a first electronic device. The method includes: The first electronic device displays a first user interface, where the first user interface includes at least two application widgets, the at least two application widgets include a first application widget and a second application widget, the first application widget is in a running state, and the second application widget is not in a running state; and the first electronic device triggers, when the first electronic device triggers the first application widget to end running, the second application widget to start to run.

According to the application widget display method provided in this embodiment of this application, an electronic device may display a plurality of application widgets, and the electronic device may further run the plurality of application widgets in series. This improves use value of the application widgets and improves user experience.

With reference to the second aspect, in a possible implementation, that the first electronic device triggers, when the first electronic device triggers the first application widget to end running, the second application widget to start to run specifically includes: The first electronic device detects a first event, where the first event is that the first application widget ends running, or the first event is an event that triggers the first application sub-widget to end running; and when the first event meets a running start condition of the second application widget, the first electronic device triggers the second application widget to start to run.

In this way, the serial running of the first application widget and the second application widget may be implemented under two conditions that a running end condition of the first application widget is consistent with the running start condition of the second application widget, or the running start condition of the second application widget is that the first application sub-widget ends running.

With reference to the second aspect, in a possible implementation, before that the first electronic device triggers the second application widget to start to run, the method further includes: The first electronic device detects an operation of setting the running start condition of the second application widget by a user, and the first electronic device obtains the running start condition of the second application widget that is set by the user through the first electronic device, and stores the running start condition of the second application widget.

In this way, the user may autonomously set the running start condition of the second application widget on the first electronic device.

With reference to the second aspect, in a possible implementation, before the first electronic device triggers the first application widget to end running, the method further includes: The first electronic device detects an operation of setting the running end condition of the first application widget by the user, and the first electronic device obtains the running end condition of the first application widget that is set by the user through the first electronic device, and stores the running end condition of the first application widget.

In this way, the user may autonomously set the running end condition of the first application widget on the first electronic device.

With reference to the second aspect, in a possible implementation, all of the at least two application widgets belong to the first electronic device; or all of the at least two application widgets belong to a second electronic device; or some of the at least two application widgets belong to the first electronic device, and some of the at least two application widgets belong to a second electronic device.

In this way, the at least two application widgets may be application widgets of a same electronic device, or may be application widgets of different electronic devices.

With reference to the second aspect, in a possible implementation, when the second application widget is an application widget of the first electronic device, that the first electronic device triggers the second application widget to start to run specifically includes: The first electronic device starts to run the second application widget. Alternatively, when the second application widget is an application widget of the second electronic device, that the first electronic device triggers the second application widget to start to run specifically includes: The first electronic device indicates the second electronic device to start to run the second application widget.

In this way, when the second application widget meets the running start condition, when the second application widget is the application widget of the first electronic device, the first electronic device may directly run the second application widget, and when the second application widget is the application widget of the second electronic device, the first electronic device may indicate the second electronic device to start to run the second application widget.

With reference to the second aspect, in a possible implementation, when the first application widget is an application widget of the first electronic device, that the first electronic device triggers the first application widget to end running specifically includes: The first electronic device ends running of the first application widget. Alternatively, when the first application widget is an application widget of the second electronic device, that the first electronic device triggers the first application widget to end running specifically includes: The first electronic device indicates the second electronic device to end running of the first application widget.

In this way, when the first application widget meets the running end condition, when the first application widget is the application widget of the first electronic device, the first electronic device may directly end running of the first application widget, and when the first application widget is the application widget of the second electronic device, the first electronic device may indicate the second electronic device to end running of the first application widget.

With reference to the second aspect, in a possible implementation, the first user interface is a desktop or a leftmost screen.

In this way, the application widgets can be displayed on a plurality of different user interfaces.

According to the second aspect, the first electronic device may be an electronic device 100. The second electronic device may be an electronic device 200. The first user interface may be the desktop or the leftmost screen of the first electronic device. The first application widget and the second application widget may be two independent applications.

According to a third aspect, an embodiment of this application provides an application widget display method, applied to a first electronic device. The method includes: The first electronic device combines at least two application sub-widgets to generate a first application widget; and the first electronic device displays a first user interface, where the first user interface includes the first application widget.

According to the application widget display method provided in this embodiment of this application, an electronic device may combine and arrange a plurality of application widgets to generate and display a composite application widget. This improves use value of the application widgets and improves user experience.

With reference to the third aspect, in a possible implementation, the first application widget is generated after the first electronic device combines and arranges the at least two application sub-widgets based on a preset system template, or the first application widget is generated after the first electronic device detects an operation of combining and arranging the at least two application sub-widgets by a user.

In this way, the user may select, on the first electronic device, the preset system template to combine and arrange the application widgets, or autonomously combine and arrange the application widgets.

With reference to the third aspect, in a possible implementation, before that the first electronic device displays a first user interface, the method further includes: The first electronic device displays a second user interface, where the second user interface includes one or more preset system templates; and the first electronic device generates the first application widget after combining and arranging the at least two application sub-widgets on the second user interface based on the preset system template, specifically, the first electronic device combines and arranges the at least two application sub-widgets based on one preset system template in the one or more preset system templates; or the first electronic device displays a third user interface; and the first electronic device detects, on the third user interface, an operation of dragging the at least two application sub-widgets by the user to combine and arrange the at least two application sub-widgets, and generates the first application widget; and the first electronic device detects an operation of adding the first application widget to the first user interface by the user, and the first electronic device displays the first application widget on the first user interface.

In this way, the user may select, on the first electronic device, the preset system template to combine and arrange the application widgets, or autonomously combine and arrange the application widgets.

With reference to the third aspect, in a possible implementation, before that the first electronic device displays a second user interface or that the first electronic device displays a third user interface, the method further includes: The first electronic device displays a fourth user interface, where the fourth user interface includes a plurality of application widgets; and the first electronic device detects an operation of selecting at least one application widget in the plurality of application widgets by the user, and the first electronic device displays the second user interface or the third user interface, where the at least two application sub-widgets include the at least one application widget.

In this way, the user may select, on the first electronic device, an application sub-widget that is to be combined and arranged.

With reference to the third aspect, in a possible implementation, before that the first electronic device displays a fourth user interface, the method further includes: The first electronic device displays a fifth user interface; and in a case that the fifth user interface includes a plurality of electronic device options, and the plurality of electronic device options include an option corresponding to the first electronic device and/or options corresponding to one or more second electronic devices, the first electronic device detects an operation of the user for at least one electronic device option in the plurality of electronic device options, and the first electronic device displays the fourth user interface, where the fourth user interface includes an application widget of an electronic device corresponding to the at least one electronic device option; or in a case that the fifth user interface includes one or more application options, the first electronic device detects an operation of the user for at least one application option in the one or more application options, and the first electronic device displays the fourth user interface, where the fourth user interface includes an application widget corresponding to the at least one application option. The application option is an option corresponding to an application. The application may provide one or more application widgets, and the application widget may provide one or more functions in the application.

In this way, the user may view and select, by tapping a corresponding electronic device option or application option on the first electronic device, an application widget provided by an electronic device or an application.

With reference to the third aspect, in a possible implementation, before that the first electronic device displays a fifth user interface, the method further includes: The first electronic device displays one application sub-widget in the at least two application sub-widgets on the first user interface, detects an operation of performing display setting by the user for the application sub-widget, and the first electronic device displays the fifth user interface. Alternatively, the first electronic device displays an icon of a first application on a desktop; the first electronic device detects an operation of the user for the icon of the first application, and displays one application sub-widget in the at least two application sub-widgets, where the application sub-widget corresponds to the first application; and the first electronic device detects an operation of performing display setting by the user for the application sub-widget, and the first electronic device displays the fifth user interface. Alternatively, the first electronic device detects a swipe up operation of the user on a desktop, and the first electronic device displays a sixth user interface; and the first electronic device detects an operation of triggering application widget display setting on the sixth user interface by the user, and the first electronic device displays the fifth user interface. Alternatively, the first electronic device detects a two-finger pinch operation of the user on a desktop, and the first electronic device displays a seventh user interface; and the first electronic device detects an operation of triggering application widget display setting on the seventh user interface by the user, and the first electronic device displays the fifth user interface. Alternatively, the first electronic device displays the at least two application sub-widgets on the first user interface, the first electronic device detects an operation of combining two application sub-widgets in the at least two application sub-widgets by the user, and the first electronic device displays the fifth user interface.

In this way, the first electronic device may be triggered, in different manners, to display the fifth user interface.

With reference to the third aspect, in a possible implementation, all of the at least two application sub-widgets belong to the first electronic device; or all of the at least two application sub-widgets belong to the second electronic device; or some of the at least two application sub-widgets belong to the first electronic device, and some of the at least two application sub-widgets belong to the second electronic device.

In this way, the first application widget may be generated by combining and arranging application widgets of a same electronic device, or may be generated by combining and arranging application widgets of different electronic devices.

According to the third aspect, the first electronic device may be an electronic device 100. The second electronic device may be an electronic device 200. The first user interface may be the desktop or a leftmost screen of the first electronic device. The first application widget may be an application widget obtained through combining and arranging. The application sub-widgets may be application widgets that are combined and arranged to generate the first application widget. The second user interface may be a user interface shown in FIG. 3I or FIG. 3J. The third user interface may be a user interface shown in FIG. 3L. The fourth user interface may be a user interface shown in FIG. 3F. The fifth user interface may be a user interface shown in FIG. 3D. The sixth user interface may be a user interface shown in FIG. 6B. The seventh user interface may be a user interface shown in FIG. 3B.

According to a fourth aspect, an embodiment of this application provides a communication system, where the communication system includes a first electronic device and a second electronic device, where the first electronic device is configured to display a first user interface, where the first user interface includes a first application widget, the first application widget is generated by combining at least two application sub-widgets, the at least two application sub-widgets include a first application sub-widget, and the first application sub-widget is located in the second electronic device; the first electronic device is further configured to: when a detected first event meets a running start condition of the first application sub-widget, indicate the second electronic device to start to run the first application sub-widget; and the second electronic device is configured to start to run the first application sub-widget based on an indication of the second electronic device.

According to the fourth aspect, the first electronic device may be an electronic device 100. The second electronic device may be an electronic device 200. The first user interface may be a desktop or a leftmost screen of the first electronic device. The first application widget may be an application widget obtained through combining and arranging. The application sub-widgets may be application widgets that are combined and arranged to generate the first application widget.

According to a fifth aspect, an embodiment of this application provides an electronic device. The electronic device includes one or more processors and one or more memories, where the one or more memories are coupled to the one or more processors, the one or more memories are configured to store computer program code, the computer program code includes computer instructions, and when the one or more processors execute the computer instructions, the electronic device is enabled to perform the method according to any one of the possible implementations of the first aspect or the second aspect or the third aspect.

According to a sixth aspect, an embodiment of this application provides a computer storage medium. The computer storage medium stores a computer program, the computer program includes program instructions, and when the program instructions are run on an electronic device, the electronic device is enabled to perform the method according to any one of the possible implementations of the first aspect or the second aspect or the third aspect.

According to a seventh aspect, an embodiment of this application provides a computer program product. When the computer program product runs on a computer, the computer is enabled to perform the method according to any one of the possible implementations of the first aspect or the second aspect or the third aspect.

### BRIEF DESCRIPTION OF DRAWINGS

FIG. 1 is a schematic diagram of a typical user interface on which an application widget is displayed according to an embodiment of this application;
FIG. 2 is a schematic diagram of a communication system according to an embodiment of this application;
FIG. 3A to FIG. 3P are schematic diagrams of a group of user interfaces for application widget display setting and an internal principle of combining and arranging application widgets according to an embodiment of this application;
FIG. 4A to FIG. 4C are schematic diagrams of a group of user interfaces for triggering application widget display setting and application widget running setting according to an embodiment of this application;
FIG. 5A and FIG. 5B are schematic diagrams of another group of user interfaces for triggering application widget display setting and application widget running setting according to an embodiment of this application;
FIG. 6A to FIG. 6D are schematic diagrams of another group of user interfaces for triggering application widget display setting and application widget running setting according to an embodiment of this application;
FIG. 7A to FIG. 7C are schematic diagrams of running manners of a group of application widgets according to an embodiment of this application;
FIG. 7D is a schematic diagram of a running manner of application widgets in an actual application scenario according to an embodiment of this application;
FIG. 8A to FIG. 8E are schematic diagrams of a group of user interfaces for setting a running start condition/running end condition of an application widget according to an embodiment of this application;
FIG. 9A to FIG. 9F are schematic diagrams of another group of user interfaces for setting a running start/end condition of an application widget according to an embodiment of this application;
FIG. 10A and FIG. 10B are a schematic diagram of a software architecture involved in a process of display setting and running setting of an application widget of a local/remote device according to an embodiment of this application;
FIG. 11A and FIG. 11B are a schematic flowchart of obtaining application widget data of a remote device by a local device according to an embodiment of this application; and
FIG. 12 is a schematic diagram of a structure of an electronic device according to an embodiment of this application.

### DESCRIPTION OF EMBODIMENTS

The following clearly and completely describes technical solutions in embodiments of this application with reference to accompanying drawings in embodiments of this application. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

It should be understood that terms "first", "second", and the like in the specification, the claims, and the accompanying drawings of this application are intended to distinguish between different objects, but are not intended to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application means that a particular feature, structure, or feature described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this application may be combined with another embodiment.

The term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of a graphical user interface (graphic user interface, GUI), which is a user interface displayed in a graphical mode and related to computer operations. The user interface may be a visual interface element such as a text, an icon, a button, a menu, a tab, a text box, a dialog box, a status bar, a navigation bar, or a Widget that is displayed on a display of the electronic device.

For ease of understanding, a concept of "application widget" in embodiments of this application is first described.

The application widget (Application Widget, APP Widget) may also be referred to as a card, a service card, a service widget (Service Widget), an application widget, or an application widget, is an interface display form, and is configured to display important information of an application on a desktop of an electronic device. A user can use the application widget through a shortcut gesture, to access a service in one step and reduce level jumps.

The application widget is an interface display form, and is usually independently customized by a third party (for example, a developer of an application), that is, is customized independently of the application corresponding to the application widget. The application widget may be configured to be embedded into another application as a part of an interface of the another application for display. For example, a user (for example, a desktop application) may be allowed to embed the application widget into an interface of the user (for example, an activity component of an Android operating system) for display. In other words, for any application, an application widget corresponding to the application is independent of the application. To be specific, the application widget corresponding to the application is not an application interface of the application, but the application widget corresponding to the application may perform data interaction with the application to update or add important information of the application or an operation to the application widget, to access a service in one step and reduce experience levels. For example, an application widget set based on the Android operating system may be referred to as an ongoing card (ongoing card), and an application widget set based on a Harmony operating system may be referred to as a service card, for example, form ability (FA).

An application may be configured with application widgets of different display sizes. Generally, display sizes of application widgets may be classified into a micro size (1x2), a small size (2x2), a medium size (2x4), a large size (4x4), and the like. The application widgets of different display sizes have different degrees of richness of displayed content. A larger display size generally indicates a higher degree of richness of displayed content.

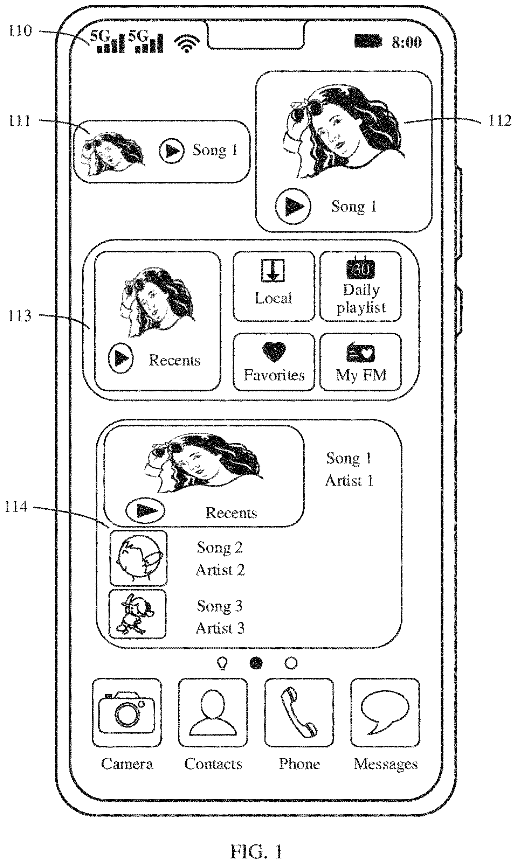

An application widget configured for a music application is used as an example. As shown in FIG. 1, four application widgets (for example, an application widget 111, an application widget 112, an application widget 113, and an application widget 114) of different display sizes are displayed on a user interface 110 (namely, a desktop), where a display size of the application widget 111 is the micro size, a display size of the application widget 112 is the small size, a display size of the application widget 113 is the medium size, and a display size of the application widget 114 is the large size. It can be seen that content displayed by the application widgets of the micro size and the small size is simple, for example, only a song name and a song picture are displayed; and content displayed by the application widgets of the medium size and the large size is rich, for example, in addition to the content displayed by the application widgets of the micro size and the small size, a plurality of interface option entries (for example, interface option entries such as "Local", "Daily playlist", "Favorites", and "My FM" displayed on the application widget 113) may be further displayed, and the user may tap one of the interface options to enter a user interface corresponding to the option in the music application. In addition, more song lists (for example, "Song 2" and "Song 3" displayed on the application widget 114) may be further displayed, and the user may tap one of the songs to play.

The application widget is merely a word used in embodiments, and a meaning represented by the application widget has been recorded in embodiments of this application. A name of the application widget does not constitute any limitation on embodiments.

Currently, application widgets are generally developed by electronic device manufacturers. The application widgets are independent of each other and run based on a local device. A user can use only functions of a single application widget through a single-point operation. Appropriate series connections, mutual linkage, and interaction among the application widgets and among cross-device application widgets cannot be effectively implemented in some manners. As a result, a usage scenario of the application widget is limited, use value of the application widget is reduced, and user experience is poor.

Embodiments of this application provide an application widget setting method. An electronic device may combine and arrange a plurality of application widgets (namely, an application widget provided by a local device and/or an application widget provided by a remote device that establishes a communication connection to the local device) to generate and display a composite application widget. In addition, the electronic device may further run the composite application widget according to preset logic. This can resolve a problem that the plurality of application widgets cannot be effectively connected in series, link with each other, and interact with each other, improve use value of the application widgets, and improve user experience.

In embodiments of this application, the composite application widget (also referred to as a composite service card) may be an application widget that is generated by combining a plurality of atomic application widgets and that can provide a plurality of functions. The atomic application widget (also referred to as an atomic service card) may be an application widget that has a single function, that is not combined with another application widget, and that is provided by the electronic device.

The application widget setting method provided in embodiments of this application mainly includes the following two solutions.

Solution 1 (application widget display setting): An electronic device 100 (namely, the local device) is configured to combine and arrange a plurality of application widgets (namely, the application widget provided by the local device and/or the application widget provided by the remote device that establishes a communication connection with the local device) to generate and display the composite application widget.

Solution 2 (application widget running setting): An electronic device 100 is configured to set a running condition of a single application widget or a running condition of a composite application widget. When the electronic device 100 determines that the application widget meets a preset running condition, the application widget may start to run.

The foregoing two solutions are described in detail in subsequent embodiments, and are not described herein.

The following first describes a communication system provided in embodiments of this application.

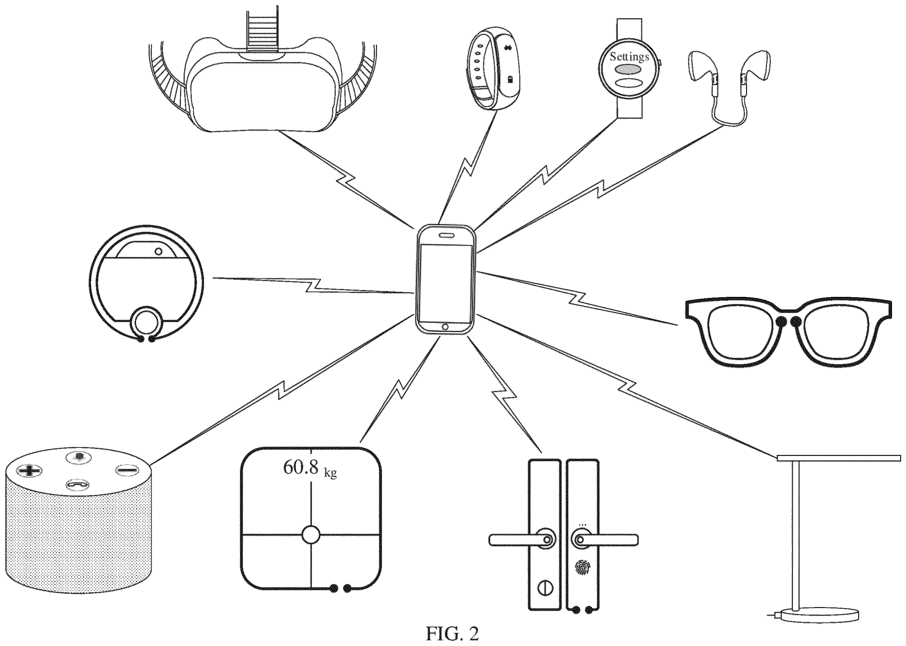

**FIG. 2** **shows an example of a communication system according to an embodiment of this application.**

As shown in FIG. 2, the communication system may include a plurality of electronic devices. The communication system may also be referred to as a distributed system.

The plurality of electronic devices included in the communication system are all intelligent terminal devices, and may be of various types. Specific types of the plurality of electronic devices are not limited in this embodiment of this application. For example, the plurality of electronic devices may include a mobile phone, may further include a tablet computer, a desktop computer, a laptop computer, a handheld computer, a notebook computer, a smart screen, a wearable device, an augmented reality (Augmented Reality, AR) device, a virtual reality (Virtual Reality, VR) device, an artificial intelligence (Artificial Intelligence, AI) device, a head unit, a smart headset, and a game console, and may further include an internet of things (Internet of Things, IOT) device, a smart household appliance like a smart water heater, a smart lamp, or a smart air conditioner, a smart fitness machine, a smart medical device like a blood pressure machine, or the like.

The plurality of electronic devices in the communication system may be connected to each other by logging in to a same account. For example, the plurality of electronic devices may log in to a same Huawei account, and are remotely connected to and communicated with each other by using a server. The account may be a mobile phone number, an email address, a user-defined user name, a user name allocated by an APP server, a user name used for login in an APP in the electronic device, or the like.

The plurality of electronic devices in the communication system may alternatively log in to different accounts, but are connected in a binding manner. After an electronic device logs in to an account, the electronic device may be bound to, in a device management application, other electronic devices that log in to different accounts or that do not log in to, and then these electronic devices may communicate with each other through the device management application.

The plurality of electronic devices in the communication system may alternatively establish connections in a manner of scanning a two-dimensional code, near field communication (near field communication, NFC) OneHop, searching for a Bluetooth device, or the like. This is not limited herein.

In general, communication connections established between the plurality of electronic devices in the communication system may include but are not limited to a wired connection, a wireless connection like a Bluetooth (Bluetooth, BT) connection, a wireless local area network (wireless local area network, WLAN) connection like a wireless fidelity point-to-point (wireless fidelity point to point, Wi-Fi P2P) connection, a near field communication (near field communication, NFC) connection, an infrared (infrared, IR) connection, a remote connection (for example, a connection established by using a server), and the like.

In addition, the plurality of electronic devices in the communication system may be connected to and communicate with each other in any one of the foregoing manners. This is not limited in this embodiment of this application.

Different software operating systems (Operating Systems, OSs) may be configured for the plurality of electronic devices in the communication system, including but not limited to Harmony^{®}, Android°, iOS^{®}, Windows^{®}, Linux°, and the like. Harmony° is Huawei's HarmonyOS. A same software operating system, for example, HarmonyOS^{®}, may be configured for the plurality of electronic devices. When software operating systems of the plurality of electronic devices are all HarmonyOS^{®}, the communication system may be considered as a super terminal.

In this embodiment of this application, a conventional application (application, APP), for example, a camera application, a gallery application, or a setting application, may be installed on each device in the communication system. In subsequent embodiments, the conventional APP may be briefly referred to as an APP.

In addition, a distributed application (distributed application) may also be installed in the communication system. The distributed application may be a system application, or may be a third-party application. This is not limited herein.

Different from an APP with a plurality of types of abilities (abilities), the distributed application can be deployed in a unit of a single ability. Taking Harmony^{®} as an example, the ability (ability) may include the following two types.

### (1) Feature ability (Feature Ability, FA)

The FA indicates an ability of including one or more UIs, and is used to interact with users. For example, a navigation interface in a map application, a video call screen in an instant messaging application, and the like may be implemented as the FA.

In some embodiments, the FA is developed based on an MVVM (model-view-view-model) mode, to separate a view UI from service logic, and separately deploy service logic code and view UI code. For example, an electronic device may integrate the service logic code and another APP for installation, and view UI code may be installed in another electronic device. The device in which the view UI code is located can communicate with the device in which the service logic code is located, to obtain data required for UI display.

The FA supports a page template ability, for example, an empty ability, a login ability, and a setting ability. The FA can use a script language (java script, JS) to provide a declarative development mode, use a HTML-like and cascading style sheet (cascading style sheet, CSS) declarative programming language as a development language of a page layout and a page style, and support a JS language that conforms to an ECMAScript specification in providing page service logic.

The FA has abilities of installation-free, independent running, cross-device UI migration, and the like. The FA further has features of multi-end deployment and distributed execution.

The FA can also invoke an APP to implement more functions that are more complex.

### (2) Particle ability (Particle Ability, PA)

The PA indicates an ability that there is no UI, and can provide support for an FA. For example, the PA can serve as a background service to provide a computing capability or serve as a data warehouse to provide a data access capability. For example, a beauty function, a positioning function, and an audio/video codec function may be encapsulated as the PA.

The PA also has features of multi-end deployment, distributed execution, and the like. The PA depends only on a system service, and does not depend on another PA.

The PA actually implements and encapsulates remote virtualization, remote invocation, PA management, cross-platform compatibility, security, and the like, and open cross-device service enabling and calling to a developer, supporting another device in invoking a computing capability of a local device to collaborate with the another device to complete computing work. The PA supports a service ability, a data ability, and the like. The service ability is used to provide a capability of running a task in the background. The data ability is used to provide unified data access abstraction externally.

The PA can invoke an FA or an APP to implement more functions that are more complex.

It may be understood that "FA" and "PA" are merely terms used in this embodiment, and may also be referred to as other terms in some other embodiments of this application. For example, "PA" and "FA" may also be referred to as other terms such as an atomic service or an atomic application and a meta capability or a feature capability.

One distributed application consists of one or more FAs/PAs.

In this embodiment of this application, an application widget may be configured by a single FA/PA (which may also be referred to as an atomic service) in a distributed application, or may be configured by an application that needs to be installed in a conventional manner.

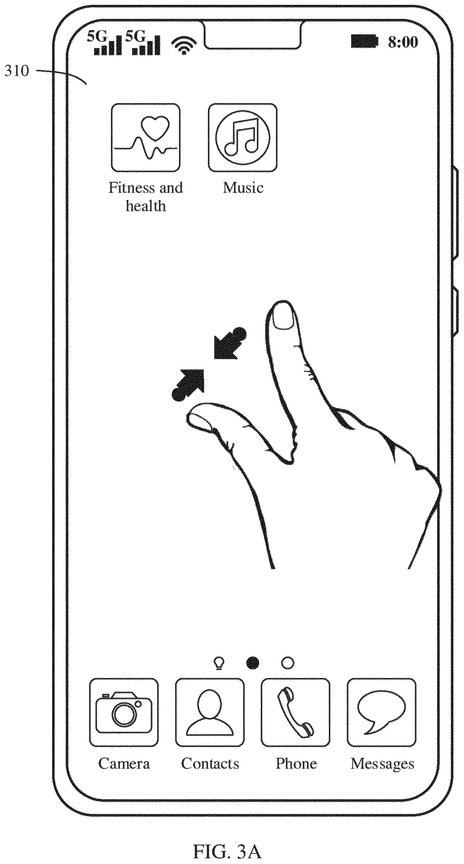

**With reference to** **FIG. 3A to FIG. 3P****, the following describes in detail a series of examples of user interfaces and an internal principle of combining and arranging application widgets involved in Solution 1 (application widget display setting).**
**(1)** **FIG. 3A to FIG. 3C** **show examples of a series of user interfaces involved in a process in which a user enters an application widget display setting entry.**

As shown in FIG. 3A, an electronic device 100 may display a user interface 310. The user interface 310 may be a desktop of the electronic device 100. The electronic device 100 may detect an operation of pinching with fingers of the user on a desktop, and in response to the operation, the electronic device 100 may display a user interface 320 shown in FIG. 3B as an example.

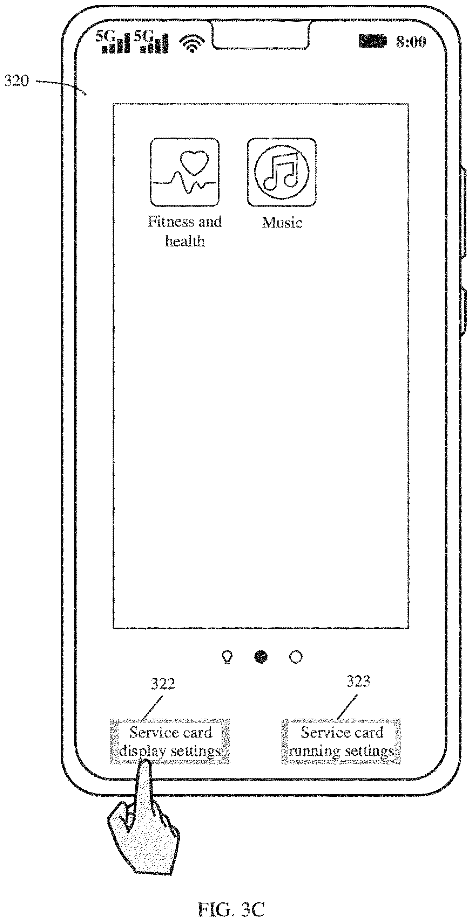

As shown in FIG. 3B, the user interface 320 may include a plurality of options (for example, a service card management option 321, a wallpaper option, and a desktop setting option). The electronic device 100 may detect an operation (for example, a tap operation) of the user for the service card management option 321, and in response to the operation, the electronic device 100 may display, on the user interface 320, a service card display setting option 322 and a service card running setting option 323 that are shown in FIG. 3C as an example. The service card display setting option 322 is used by the user to set a display manner of a service card, and the service card running setting option 323 is used by the user to set a running manner of the service card.

As shown in FIG. 3C, the electronic device 100 may detect an operation (for example, a tap operation) of the user for the service card display setting option 322, and in response to the operation, the electronic device 100 may display a user interface 330 shown in FIG. 3D as an example, so that the user performs subsequent service card display setting.

**(2)** **FIG. 3D to FIG. 3G** **shows examples of a series of user interfaces involved in a process in which the user selects an application widget on which application widget display setting needs to be performed.**

As shown in FIG. 3D, in a possible implementation, the electronic device 100 may display, in a device dimension and an application dimension, an application widget of a local device and an application widget of a remote device that establishes a connection to the local device. Application widget data (such as application widget UI style data, appearance size data, and function data) obtained by the electronic device 100 from the local/remote device depends on an application widget data access capability of the electronic device 100. The application widget data access capability is described in detail in a subsequent embodiment, and is not described herein.

Still refer to FIG. 3D. In the device dimension, the electronic device 100 may display, based on a device type/device name, a device option (for example, a "Local device" option, a "Smart screen" option, a "Laptop" option, a "Tablet" option, a "Watch" option, a "Smart sound box" option, a "Hi Car" option, a "VR glasses" option, an "Earphone" option, or an "AI Life" option) of an electronic device corresponding to an application widget that has been successfully obtained by the electronic device 100. The user may tap the device option to view and select the application widget provided by the electronic device. A device option of the remote device is generated based on device information of the remote device, and the device information of the remote device is obtained by the electronic device 100 from the remote device based on a connection established between the electronic device 100 and the remote device.

It is easy to understand that, when the electronic device 100 fails to obtain application widget data of an electronic device that establishes a connection to the electronic device 100 (that is, an exception occurs in obtaining the application widget data), the electronic device 100 may not display a device option of the electronic device.

Still refer to FIG. 3D. In the application dimension, the electronic device 100 may display, based on an application name, an option of an application (for example, a "Fitness and health" option or a "Music" option) corresponding to an application widget that has been successfully obtained by the electronic device 100. The user may tap the option of the application to view and select the application widget provided by the application. It is easy to understand that in addition to the "Fitness and health" option and the "Music" option, the user may view more other application options through a swipe up operation. The application option is generated based on information about an application, and the information about the application of the remote device is obtained by the electronic device 100 from the remote device based on a connection established between the electronic device 100 and the remote device.

In some embodiments, when displaying, in the application dimension, an application widget provided by an application, the electronic device 100 may simultaneously display a device identifier of an electronic device that provides the application. In this way, when a same application is simultaneously installed on a plurality of electronic devices, it is convenient for the user to distinguish an electronic device that provides the application.

With reference to FIG. 3D to FIG. 3G, the following uses an example in which the user selects an application widget provided by the electronic device 100 to describe a specific operation process in which the user selects an application widget.

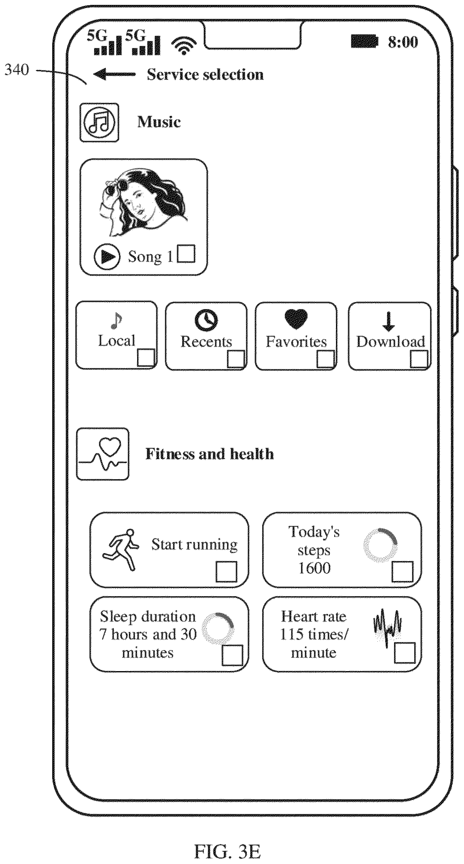

Still refer to FIG. 3D. The electronic device 100 may detect an operation (for example, a tap operation) of the user for the "Local device" option, and in response to the operation, the electronic device 100 may display a user interface 340 shown in FIG. 3E as an example. The user interface 340 may include all application widgets provided by the electronic device 100 and an application widget option corresponding to each application widget.

As shown in FIG. 3E, these application widgets may be distinguished and displayed on the user interface 340 according to application names. It can be seen that the user interface 340 currently includes an application widget provided by a "Music" application and an application widget provided by a "Fitness and health" application. The application widget provided by the "Music" application may include a "Song 1" application widget, a "Local" application widget, a "Recents" application widget, a "Favorites" application widget, a "Download" application widget, and the like. The application widget provided by the "Fitness and health" application may include a "Start running" application widget, a "Today's steps" application widget, a "Sleep duration" application widget, a "Heart rate" application widget, and the like.

It should be noted that FIG. 3E shows only the application widgets provided by the "Music" application and the "Fitness and health" application. It is easy to understand that the user may view, through a swipe up operation, application widgets provided by other applications on the electronic device 100, and select, through a tap operation, the application widgets provided by the other applications on the electronic device 100.

Still refer to FIG. 3E. Each application widget option may be used for the user to select a corresponding application widget. The user may select one or more application widget options at a time, and the one or more application widgets selected by the user may be independently added to the desktop of the electronic device 100 for display, or the plurality of application widgets are combined and arranged to generate a composite application widget, and the composite application widget is added to the desktop of the electronic device 100 for display.

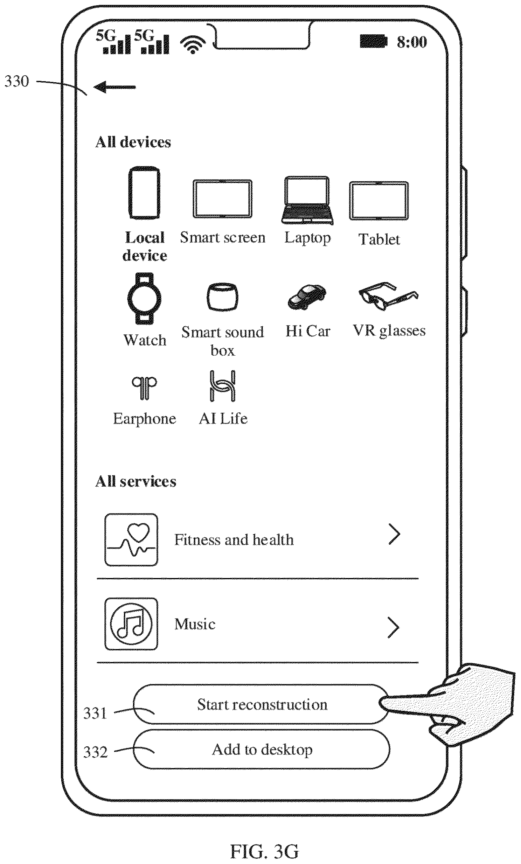

For example, as shown in FIG. 3F, it can be seen that the application widgets selected by the user are: the "Song 1" application widget, the "Start running" application widget, and the "Heart rate" application widget. Further, the electronic device 100 may detect an operation (for example, a tap operation) of the user for an option 341. In response to the operation, the electronic device 100 may save the application widget selected by the user, and display a user interface 330 shown in FIG. 3G as an example. In this case, the user interface 330 may further include a "Start reconstruction" option 331 and an "Add to desktop" option 332. The "Start reconstruction" option 331 is used by the user to perform operations such as combining and arranging the plurality of selected application widgets, and the "Add to desktop" option 332 is used by the user to independently add the one or more selected application widgets to the desktop for display (for example, add all three selected application widgets, namely, the "Song 1" application widget, the "Start running" application widget, and the "Heart rate" application widget, to the desktop for display).

In some actual application scenarios, the user may want to select application widgets provided by a plurality of devices to display on the electronic device 100. For example, after selecting the three application widgets provided by the electronic device 100, the user further wants to select an application widget provided by an in-vehicle device that establishes a connection to the electronic device 100. In this case, the user may tap the "Hi Car" option shown in FIG. 3G. Further, the electronic device 100 may display the application widget provided by the in-vehicle device, and the user may perform selection. After the selection is completed, the electronic device 100 also saves the application widget provided by the in-vehicle device selected by the user, and displays the user interface shown in FIG. 3G again. A manner in which the electronic device 100 displays the application widget provided by the in-vehicle device is similar to the foregoing manner in which the electronic device 100 displays the application widget provided by the local device, and an operation process in which the user selects the application widget provided by the in-vehicle device is also similar to an operation process in which the user selects the application widget provided by the local device. For details, refer to the foregoing related content in FIG. 3E and FIG. 3F. Details are not described herein again.

Similarly, the user may further tap an application to select an application widget corresponding to the application. For example, the user may tap the "Fitness and health" option shown in FIG. 3G. Further, the electronic device 100 may display application widgets (for example, the "Start running" application widget, the "Today's steps" application widget, the "Sleep duration" application widget, and the "Heart rate" application widget shown in FIG. 3E) provided by the "Fitness and health" application, and the user may perform selection. After the selection is completed, the electronic device 100 also saves the application widget provided by the "Fitness and health" application selected by the user, and displays the user interface shown in FIG. 3G again.

That is, in both the device dimension and the application dimension, the user may select an application widget a plurality of times. The electronic device 100 may save an application widget selected by the user each time, and perform corresponding setting on the saved application widget according to a next operation (for example, an operation of tapping the "Start reconstruction" option 331 or an operation of "Add to desktop" option 332) of the user.

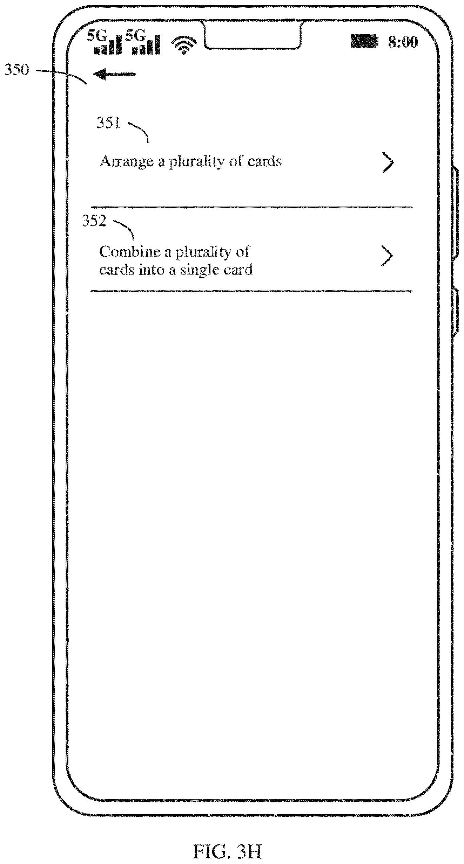

**(3)** **FIG. 3H to FIG. 3P** **show examples of a series of user interfaces and an internal principle of combining and arranging application widgets involved in a process in which the user performs application widget display setting on the selected application widget.**

The electronic device 100 may detect an operation (for example, a tap operation) of the user for the "Start reconstruction" option 331 shown in FIG. 3G. In response to the operation, the electronic device 100 may display a user interface 350 shown in FIG. 3H as an example. The user interface may include an "Arrange a plurality of cards" option 351 and a "Combine a plurality of cards into a single card" option 352, where the "Arrange a plurality of cards" option 351 is used by the user to combine and arrange a plurality of selected application widgets, and the "Combine a plurality of cards into a single card" option 352 is used by the user to combine the plurality of selected application widgets into a new card. The following provides specific descriptions.

### 1. Arrange a plurality of cards

An implementation of arranging application widgets may include but is not limited to the following two implementations: arranging application widgets based on a preset system template, and arranging application widgets randomly.

### (a) Arrange application widgets based on a preset system template

The electronic device 100 may detect an operation of the user for the "Arrange a plurality of cards" option 351 shown in FIG. 3H as an example. In response to the operation, the electronic device 100 may display a user interface 360 shown in FIG. 3I as an example. The user interface may be a user interface for arranging application widgets based on a preset system template. The user interface may include: an arranged application widget 361 (which may also be referred to as a composite application widget 361, including a "Song 1" application widget, a "Start running" application widget, and a "Heart rate" application widget), an application widget arrangement template 362, an application widget arrangement template 363, an "Edit" option 364, an option 365, and the like. It can be seen that the arranged application widget 361 is arranged based on the application widget arrangement template 362. The electronic device 100 may detect an operation of the user for the option 365. In response to the operation, the electronic device 100 may add the arranged application widget 361 to the desktop for display.

If the user wants to adjust displayed positions of application sub-widgets (namely, three atomic application widgets: the "Song 1" application widget, the "Start running" application widget, and the "Heart rate" application widget) in the arranged application widget 361, the following two possible manners may be used for implementation.

Manner 1: The user may adjust the displayed positions of the application sub-widgets in the arranged application widget 361 by switching the template. For example, the user may tap the application widget arrangement template 363 shown in FIG. 3I, and then the electronic device 100 may display a rearranged application widget 366 shown in FIG. 3J.

Manner 2: The user may first tap the "Edit" option 364 shown in FIG. 3I. In this way, the arranged application widget 361 may enter an editable state, and then the user may adjust a displayed position of a specified application sub-widget in the arranged application widget 361 through a manual drag operation. For example, the user may drag, through a horizontal drag operation, an application sub-widget of the "Song 1" application widget from the left side to the right side of the arranged application widget 361, so that the electronic device 100 may display the rearranged application widget 366 (which may also be referred to as a composite application widget 366) shown in FIG. 3J as an example.

Further, the electronic device 100 may detect an operation of the user for the option 365 shown in FIG. 3J. In response to the operation, the electronic device 100 may add the arranged application widget 366 to the desktop for display.

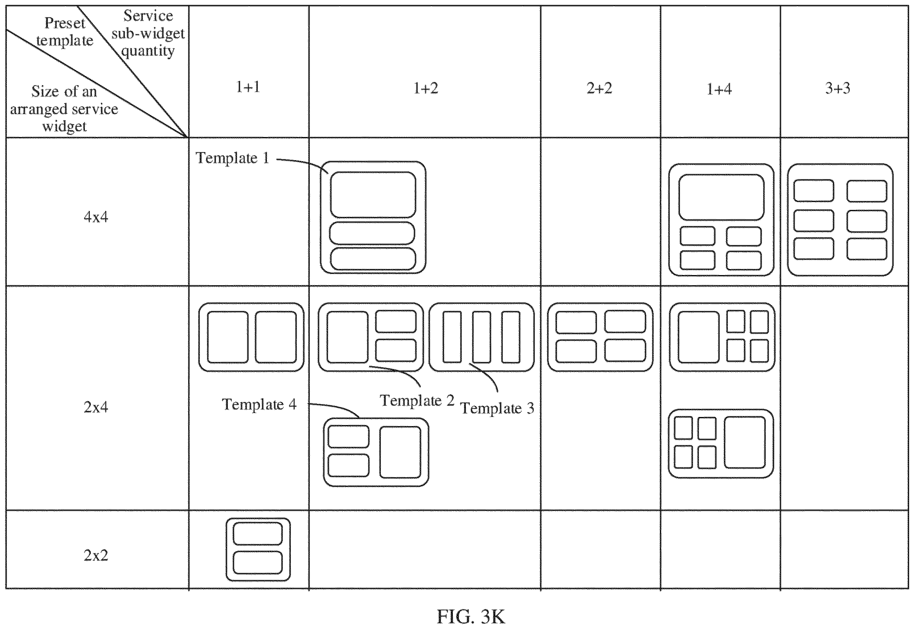

With reference to FIG. 3K, the following describes the internal principle of combining and arranging application widgets.

FIG. 3K is a schematic diagram of a preset system template for arranging application widgets according to an embodiment of this application.

As shown in FIG. 3K as an example, a size type (which may also be referred to as a specification of an arranged application widget) of the arranged application widget is (XxY). XxY may include three types: 2x2, 2x4, and 4x4, where X may be a width of the arranged application widget, and Y may be a length of the arranged application widget. It is assumed that a size of an arranged application widget corresponding to 2x2 is 50x50, a size of an arranged application widget corresponding to 2x4 is 50x100, and a size of an arranged application widget corresponding to 4x4 is 100x100.

For example, three application sub-widgets of the "Song 1" application widget, the "Start running" application widget, and the "Heart rate" application widget, are to be arranged. Before the user selects the application sub-widgets, the electronic device 100 initializes a specification of each application sub-widget, that is, the electronic device 100 may initialize appearance display sizes of the application sub-widgets of various specifications (such as a micro size, a small size, a medium size, and a large size). When the plurality of application sub-widgets selected by the user are to be arranged, the electronic device 100 calculates an available template based on the appearance display sizes of the application sub-widgets. For example, it is assumed that a size of the "Song 1" application widget is 50x50, a size of the "Start running" application widget is 25x50, and a size of the "Heart rate" application widget is 25x50. Refer to FIG. 3K. A quantity of application sub-widgets to be arranged is 3, and it can be seen that there are four preset system templates corresponding to the quantity 3 of application sub-widgets: Template 1, Template 2, Template 3, and Template 4. Through combining based on the appearance display size of each application sub-widget, it can be calculated that only two preset system templates can be used: Template 2 and Template 4. Further, the electronic device 100 may arrange the three application sub-widgets based on one template (for example, Template 2), and display the arranged application widget 361, the application widget arrangement template 362 (corresponding to Template 2), and the application widget arrangement template 363 (corresponding to Template 4) shown in FIG. 3I.

It should be noted that FIG. 3K shows only some preset system templates, and more preset system templates may be included. This is not limited in embodiments of this application.

In some embodiments, the electronic device 100 may not only support the user in adjusting a displayed position of an application sub-widget, but also support the user in adjusting a size of each application sub-widget through operations of spreading or pinching with fingers and the like. For example, if detecting that the user zooms in an application sub-widget by performing a finger spread operation, the electronic device 100 may re-match a new template according to a size of the application sub-widget that is zoomed in. If the matching fails, the electronic device 100 does not rearrange application widgets, but still displays the previously arranged application widgets. If the matching succeeds, the electronic device 100 may rearrange and display the application widgets according to the new template. This can meet a personalized requirement of the user.

In some embodiments, the template for arranging application widgets may alternatively be obtained by the user in the following manners: downloading from the cloud, downloading from an app store, downloading from a theme store, upgrading and updating a device software version, and sharing, with a local device, another electronic device that establishes a short-range communication connection (for example, a short-range communication connection of Bluetooth, a wireless local area network, or NFC) with the local device.

### (b) Arrange application widgets randomly

The electronic device 100 may detect an operation of the user for an "Arrange a plurality of cards" option 351 shown in FIG. 3H as an example. In response to the operation, the electronic device 100 may display a user interface 370 shown in FIG. 3L as an example. The user interface may include a grid container provided by the system, and a plurality of application widgets (for example, a "Song 1" application widget, a "Start running" application widget, and a "Heart rate" application widget) that have been selected by the user and that are displayed on the grid container. The plurality of application widgets are displayed after being randomly arranged by the system. On the user interface, the user may freely drag each application widget to arrange the application widgets. Compared with the manner of arranging the application widgets based on the preset system template, this manner is more flexible and diversified.

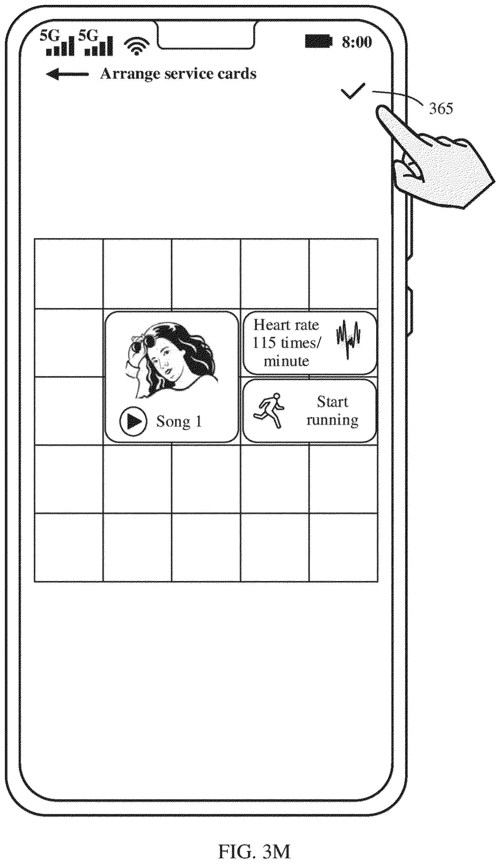

As shown in FIG. 3L, the user may drag each application widget to any position of the grid container to rearrange the application widgets. For example, the user drags the "Start running" application widget. The electronic device 100 may detect an operation of dragging the "Start running" application widget by the user to a position below the "Heart rate" application widget. In response to the operation, the electronic device 100 may display a rearranged application widget shown in FIG. 3M as an example. Further, the electronic device 100 may detect an operation (for example, a tap operation) of the user for the option 365. In response to the operation, the electronic device 100 may display a rearranged application widget 371 (which may also be referred to as a composite application widget 371) on the desktop shown in FIG. 3N.

In some embodiments, the electronic device 100 may further support the user in adjusting a size of each application sub-widget through operations of spreading or pinching with fingers and the like.

In this embodiment of this application, according to the display manner of the composite application widget shown in FIG. 3N, it may be considered that the composite application widget includes at least two sub-interfaces, where the sub-interfaces may be interfaces of the at least two application sub-widgets that form the composite application widget. It is easy to understand that, as shown in FIG. 3N, the composite application widget 371 includes three sub-interfaces: an interface of the "Song 1" application widget, an interface of the "Heart rate" application widget, and an interface of the "Start running" application widget.

### 2. Combine a plurality of cards into a single card

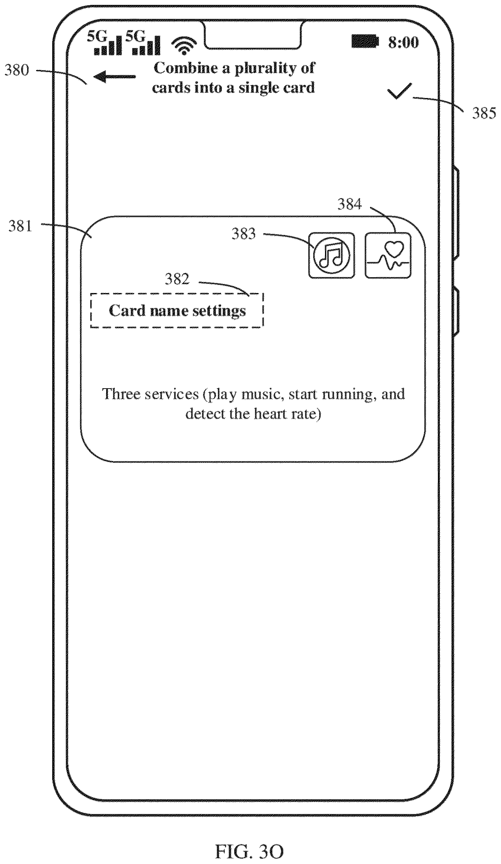

The electronic device 100 may detect an operation of the user for the "Combine a plurality of cards into a single card" option 352 shown in FIG. 3H as an example. In response to the operation, the electronic device 100 may display a user interface 380 shown in FIG. 3O as an example. The user interface may include a composite application widget 381, an option 385, and the like. The composite application widget 381 is generated and displayed after a plurality of application widgets selected by the user are combined.

An input box 382 may be displayed on the composite application widget 381, and the user may autonomously set a name of the composite application widget 381 through the input box 382. For example, the user may input "Good morning" in the input box 382, so that the composite application widget 381 may be named "Good morning". Further, the electronic device 100 may detect an operation (for example, a tap operation) of the user for the option 385. In response to the operation, the electronic device 100 displays the composite application widget 381 named "Good morning" on the desktop shown in FIG. 3P.

The composite application widget 381 may further display icons of applications corresponding to application sub-widgets combined to form the composite application widget 381. For example, the application sub-widgets combined to form the composite application widget 381 may be the "Song 1" application widget, the "Start running" application widget, and the "Heart rate" application widget, where an application corresponding to the "Song 1" application widget is a "Music" application, and applications corresponding to the "Start running" application widget and the "Heart rate" application widget are both "Fitness and health" applications. In this case, the composite application widget 381 may display an icon 383 of the "Music" application and an icon 384 of the "Fitness and health" application.

It should be noted that a display style of the composite application widget 381 shown in FIG. 3O is merely an example, and should not constitute a limitation on this application. In some embodiments, the electronic device 100 may further display composite application widgets 381 in a plurality of display styles, and the user may select one of the display styles and add a composite application widget of the display style to the desktop for display. In some other embodiments, the electronic device 100 may further support the user in adjusting an appearance display size of the composite application widget 381 through operations of spreading or pinching with fingers and the like.

In some embodiments, before displaying the user interface 380 shown in FIG. 3O, the electronic device 100 may also display a user interface (for example, in FIG. 3I, FIG. 3J, FIG. 3L, and FIG. 3M) for arranging application widgets, to support the user in arranging selected application sub-widgets. In other words, the user may first arrange the application sub-widgets, and then display the user interface 380 that is shown in FIG. 3O as an example and that is the single card obtained through integration. In this case, in some embodiments, because the user arranges the application sub-widgets before the single card is combined, when the user adds the combined single card to the desktop for display, the electronic device 100 may alternately display all the arranged application sub-widgets (for example, the application widget 371 in FIG. 3N) and the combined single card (for example, the application widget 381 shown in FIG. 3P). This can help the user view application sub-widgets that are combined and arranged to generate the combined single card. In some other embodiments, when the user adds the combined single card to the desktop for display, when one or more application sub-widgets are run, interfaces (namely, sub-interfaces) of the one or more application sub-widgets may be displayed on the combined single card, or interfaces of all combined and arranged application sub-widgets are displayed on the combined single card.

In some embodiments, after detecting an operation of the user for the "Start reconstruction" option 331 shown in FIG. 3G, the electronic device 100 may not display the user interface shown in FIG. 3H, but directly display the user interface (for example, the user interface on which the application widgets are arranged based on the preset system template and that is shown in FIG. 3I, or the user interface on which the application widgets are arranged randomly and that is shown in FIG. 3L) on which a plurality of cards are arranged, or directly display the user interface (for example, the user interface shown in FIG. 3O) on which a plurality of cards are combined into a single card.

It should be noted that the foregoing embodiment merely uses an example in which an application widget is added to a desktop for display, and is not limited thereto, for example, the application widget may be further added to another interface like a leftmost screen, a lock screen, or an interface of an application for display. This is not limited in embodiments of this application.

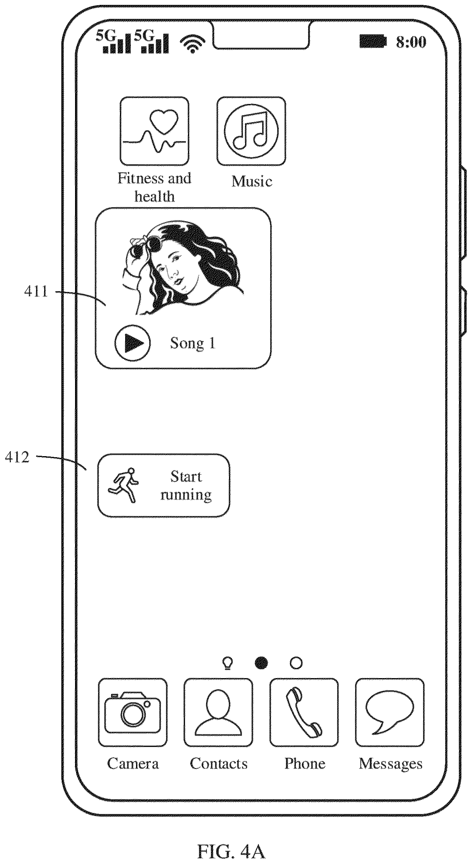

**FIG. 3A to FIG. 3C** **describe a possible implementation of triggering application widget display setting and application widget running setting. The following describes, with reference to** **FIG. 4A to FIG. 4C****,** **FIG. 5A** **and** **FIG. 5B****, and** **FIG. 6A to FIG. 6D****, other possible implementations of triggering application widget display setting and application widget running setting.**

### Implementation 1: Trigger by dragging and integrating application widgets displayed on a desktop

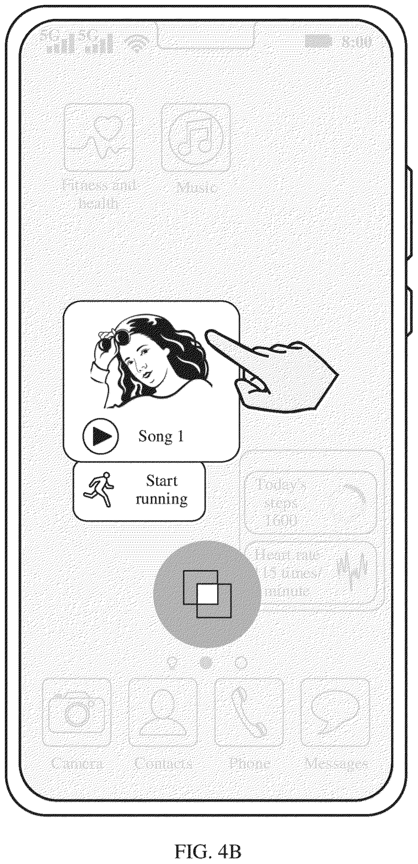

Refer to FIG. 4A and FIG. 4B. As shown in FIG. 4A, an application widget 411 and an application widget 412 may be displayed on a desktop of the electronic device 100. The application widget 411 may be an atomic application widget or a composite application widget, and the application widget 412 may also be an atomic application widget or a composite application widget, which is not limited herein. In FIG. 4A, an example in which the application widget 411 is a "Song 1" application widget is used, and an example in which the application widget 412 is a "Start running" application widget is used. Both the two application widgets are atomic application widgets. If a user wants to combine and arrange the application widget 411 and the application widget 412, the electronic device 100 may detect an operation of dragging, by the user, the application widget 411 to a location of the application widget 412 (or dragging, by the user, the application widget 412 to a location of the application widget 411) to combine the two application widgets shown in FIG. 4B. In response to the operation, the electronic device 100 may display the user interface shown in FIG. 3G, and the user may tap the "Start reconstruction" option 331 to arrange the application widget 411 and the application widget 412. For a specific execution process of arranging the application widget 411 and the application widget 412, refer to the foregoing related content. Details are not described herein again.

In some embodiments, the user may also select more other application widgets through the user interface shown in FIG. 3G. After the selection is completed, the user may tap the "Start reconstruction" option 331 to arrange the application widget 411, the application widget 412, and more other application widgets that have been selected.

In some other embodiments, after detecting the operation of dragging, by the user, the application widget 411 to the location of the application widget 412 (or dragging, by the user, the application widget 412 to the location of the application widget 411) to combine the two application widgets shown in FIG. 4B, the electronic device 100 may directly arrange the application widget 411 and the application widget 412 based on the preset system template. After the arrangement is completed, the application widgets are directly displayed on the desktop. This can simplify user operations and is convenient.

### Implementation 2: Trigger by touching and holding application widgets displayed on a desktop

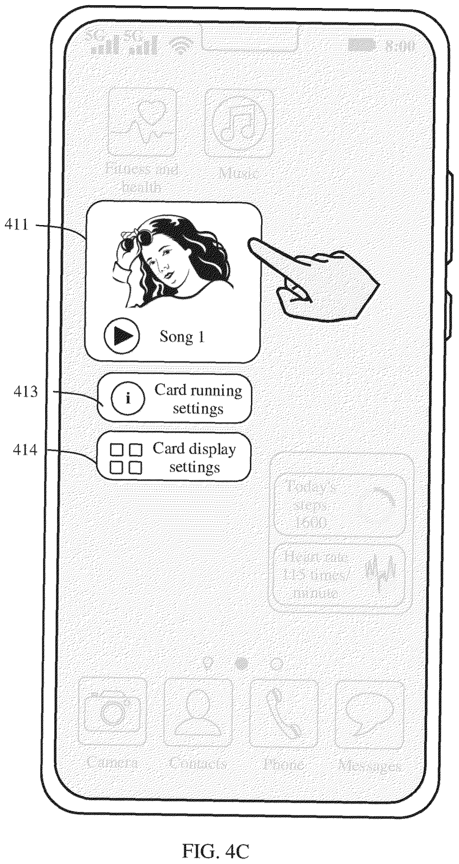

Refer to FIG. 4C. The electronic device 100 may detect an operation of touching and holding the application widget 411 displayed on the desktop by the user. In response to the operation, the electronic device 100 may display a "Card running settings" option 413 and a "Card display settings" option 414. The "Card running settings" option 413 is used by the user to set a running manner of a service card, and the "Card display settings" option 414 is used by the user to set a display manner of the service card. Further, the electronic device 100 may detect an operation (for example, a tap operation) of the user for the "Card display settings" option 414. In response to the operation, the electronic device 100 may display the user interface shown in FIG. 3G as an example to support the user in rearranging application widgets.

In some embodiments, if the application widget 411 is a composite application widget, the user may tap the "Start reconstruction" option 331 to arrange the application widget 411, or the user may first select more other application widgets through the user interface shown in FIG. 3G as an example. After the selection is completed, the user may tap the "Start reconstruction" option 331 to arrange the application widget 411 and the more other application widgets that have been selected.

In some other embodiments, if the application widget 411 is an atomic application widget, the user needs to first select more other application widgets through the user interface shown in FIG. 3G as an example. After the selection is completed, the user may tap the "Start reconstruction" option 331 to arrange the application widget 411 and the more other application widgets that have been selected.

### Implementation 3: Trigger by touching and holding application icons that can provide application widgets

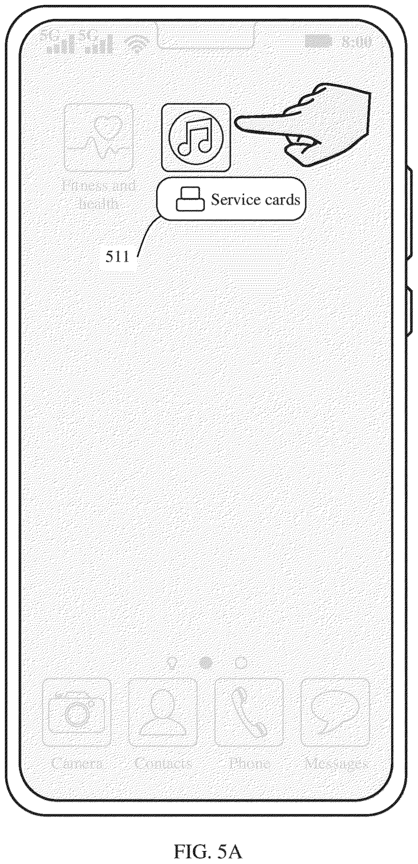

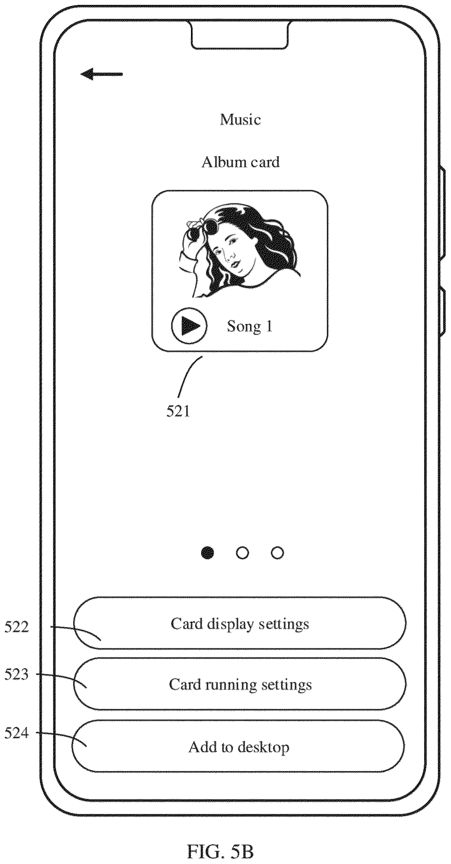

Refer to FIG. 5A and FIG. 5B. This implementation may be specific to only atomic application widgets.

It is assumed that a user wants to set an application widget provided by the "Music" application, the electronic device 100 may detect an operation of touching and holding an icon of the "Music" application by the user. In response to the operation, the electronic device 100 may display a "Service card" option 511 in FIG. 5A. The option is used by the user to perform display/running setting on the application widget provided by the "Music" application, or add the application widget to a desktop. The electronic device 100 may detect an operation (for example, a tap operation) of the user for the "Service card" option 511. In response to the operation, the electronic device 100 may display a user interface shown in FIG. 5B as an example. The user interface may include an application widget 521, a "Card display settings" option 522, a "Card running settings" option 523, an "Add to desktop" option 524, and the like. The "Card display settings" option 522 is used by the user to set a display manner of the application widget, the "Card running settings" option 523 is used by the user to set a running manner of the application widget, and the "Add to desktop" option 524 is used by the user to add the application widget to the desktop.

The electronic device 100 may detect an operation (for example, a tap operation) of the user for the "Card display settings" option 522. In response to the operation, the electronic device 100 may display the user interface shown in FIG. 3G as an example. In this case, the user needs to first select more other application widgets through the user interface shown in FIG. 3G as an example. After the selection is completed, the user may tap the "Start reconstruction" option 331 to arrange the application widget 521 and the more other application widgets that have been selected. Alternatively, if the user does not want to arrange the application widget 521 and other application widgets, the user may directly tap the "Add to desktop" option 332 to add the application widget 521 to the desktop.

### Implementation 4: Trigger through an operation of swiping up with a finger from a lower part of a desktop

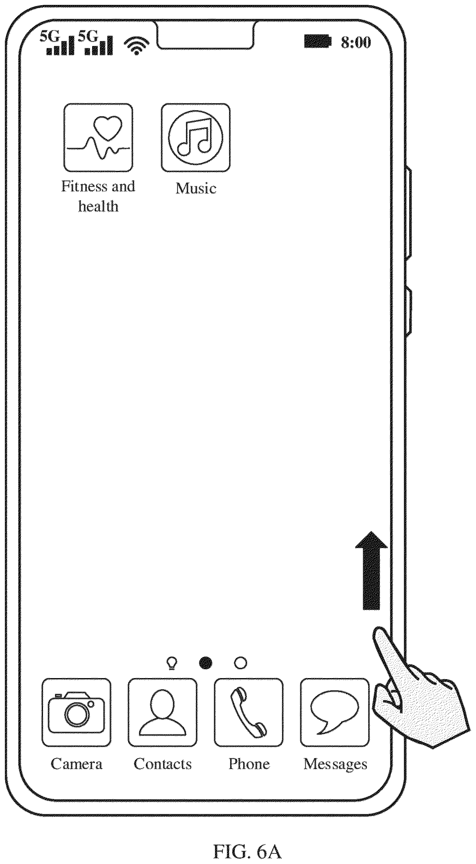

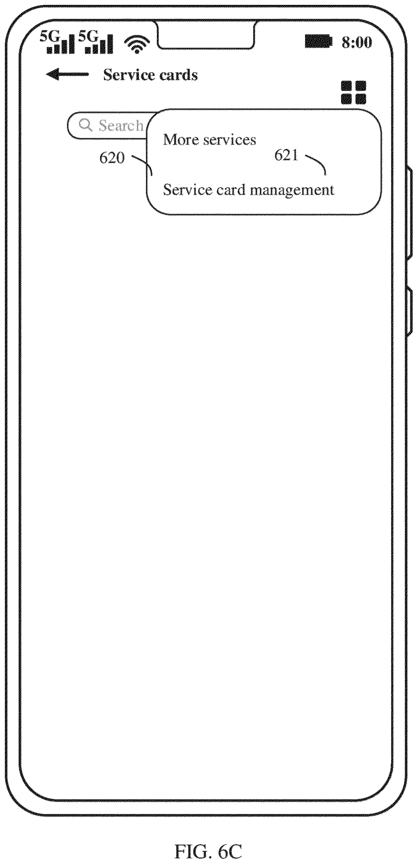

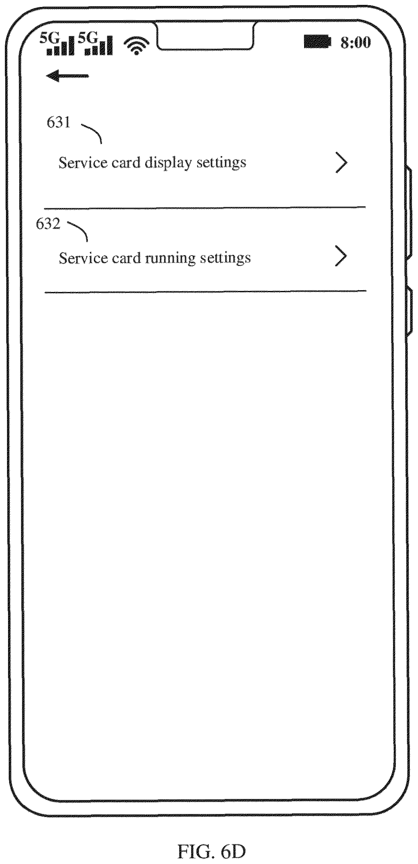

Refer to FIG. 6A to FIG. 6D. The electronic device 100 may detect a swipe up operation of the user for a lower part (for example, a lower right part or a lower left part) of the desktop shown in FIG. 6A. In response to the operation, the electronic device 100 may display a user interface shown in FIG. 6B as an example. The user interface may include an option 611 and the like. After detecting an operation of tapping the option 611 by the user, the electronic device 100 may display a window 620 shown in FIG. 6C as an example. The window may include an option 621 and the like. After detecting an operation of tapping the option 621 by the user, the electronic device 100 may display a user interface shown in FIG. 6D as an example. The user interface may include a "Service card display settings" option 631, a "Service card running settings" option 632, and the like. The "Service card display settings" option 631 is used by the user to set a display manner of the application widget, and the "Service card running settings" option 631 is used by the user to set a running manner of the application widget.

Further, the electronic device 100 may detect an operation (for example, a tap operation) of the user for the "Service card display settings" option 631. In response to the operation, the electronic device 100 may display the user interface shown in FIG. 3D as an example. Through the user interface, the user may select a plurality of application widgets for arrangement and add the plurality of application widgets to the desktop. For a specific operation process, refer to related content in FIG. 3D to FIG. 3P. Details are not described herein again.

It should be noted that implementations of triggering application widget display setting and application widget running setting are not limited to the foregoing several implementations, and may further include more other implementations. This is not limited in embodiments of this application.

**With reference to** **FIG. 7A to FIG. 7D****,** **FIG. 8A to FIG. 8E****, and** **FIG. 9A to FIG. 9F****, the following describes in detail a series of examples of running manners of application widgets and user interfaces for setting a running start condition/running end condition of an application widget involved in Solution 2 (application widget running setting).**
**(1)** **FIG. 7A to FIG. 7C** **show examples of running manners of application widgets. The running manners of the application widgets may include but are not limited to the following three types: a synchronous running manner, a parallel running manner, and a hybrid running manner. The following uses an application widget 1, an application widget 2, an application widget 3, and an application widget 4 as an example to describe the three running manners in detail.**

### (a) Synchronous running manner:

The synchronous running manner means that a latter application widget can start to run only after a former application widget ends running, that is, all application widgets need to run sequentially.

As shown in FIG. 7A, the application widget 1 may be a first application widget that starts to run. After the running of the application widget 1 ends, the application widget 2 may be notified. If the application widget 2 meets a running start condition, the application widget 2 starts to run. After the running of the application widget 2 ends, the application widget 3 may be notified. If the application widget 3 meets a running start condition, the application widget 3 starts to run. After the running of the application widget 3 ends, the application widget 4 may be notified. If the application widget 4 meets a running start condition, the application widget 4 starts to run, until the running of the application widget 4 ends. In other words, step S701a, step S702a, step S703a, and step S704a need to be sequentially performed.

Particularly, a running start condition of the latter application widget may be that a notification indicating that the former application widget ends running is received. In this case, after the former application widget ends running, the latter application widget may start to run immediately.

### (b) Parallel running manner:

The parallel running manner means that all application widgets can run simultaneously; or an application widget can run as long as the application widget meets a running start condition, and the application widgets are not restricted by each other. For example, if a former application widget is still running, and a latter application widget meets a running start condition, the latter application widget can also run, without the need that the latter application widget can run only after running of the former application widget ends.

As shown in FIG. 7B, in a possible implementation, when running triggering conditions of the application widget 1, the application widget 2, the application widget 3, and the application widget 4 are the same, the application widget 1, the application widget 2, the application widget 3, and the application widget 4 may start to run at the same time. In other words, step S701b, step S702b, step S703b, and step S704b may start to be performed at the same time.

In another possible implementation, when running triggering conditions of the application widget 1, the application widget 2, the application widget 3, and the application widget 4 are different, the application widget 1, the application widget 2, the application widget 3, and the application widget 4 may start to run at the same time, or may not run at the same time. For example, if the running triggering condition of the application widget 1 is that the application widget 2 starts to run, the application widget 1 starts to run after the application widget 2 starts to run.

### (c) Hybrid running manner:

The hybrid running manner means a running manner in which the foregoing synchronous running manner and the foregoing parallel running manner coexist, that is, some application widgets run synchronously, and some application widgets run in parallel.

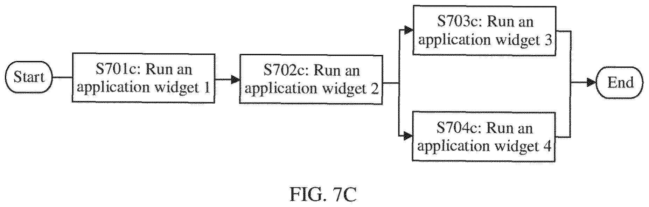

As shown in FIG. 7C, it can be seen that a running manner of the application widget 1 and the application widget 2 is the synchronous running manner, and a running manner of the application widget 3 and the application widget 4 is the parallel running manner. In other words, step S701c and step S702c are sequentially performed. After step S702c is performed, step S703c and step S704c are performed. Step S703c and step S704c may be performed simultaneously or not simultaneously.

It should be noted that the application widget 1, the application widget 2, the application widget 3, and the application widget 4 may be atomic application widgets, or may be composite application widgets. A device that provides these application widgets may be the electronic device 100, or may be another electronic device that establishes a connection to the electronic device 100. This is not limited in embodiments of this application.

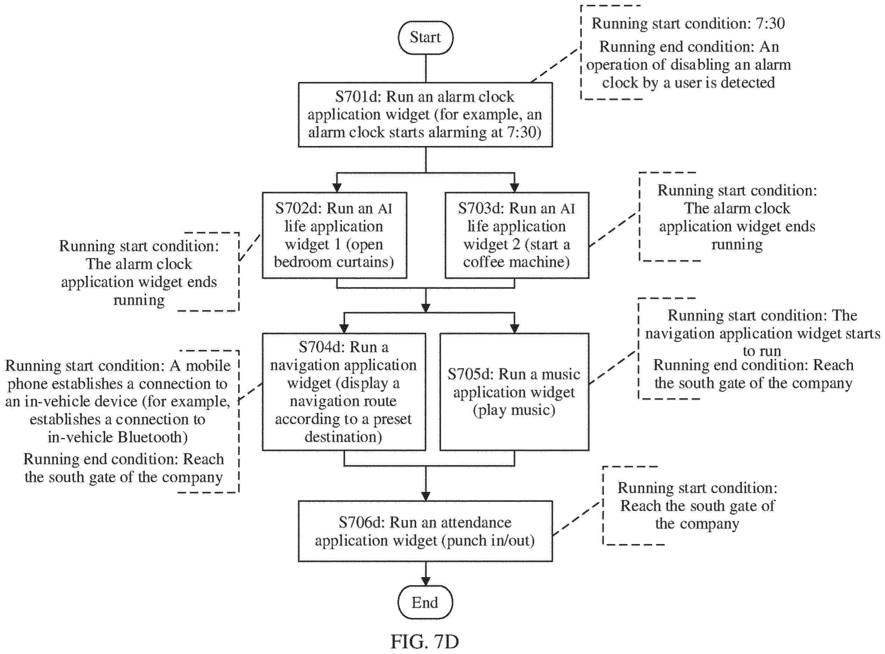

**Based on the application widget running manners shown in** **FIG. 7A to FIG. 7C****, the following uses a specific application scenario in actual life as an example for description. As shown in** **FIG. 7D****, a life scenario from getting up in the morning to going to work is used as an example.**

Step S701d: Run an alarm clock application widget (for example, an alarm clock starts alarming at 7:30).

A user may autonomously set a running start condition and a running end condition of the alarm clock application widget. A specific operation process of setting the running start condition/running end condition of the application widget is described in detail in subsequent embodiments. Details are not described herein.

For example, it is assumed that the user sets the running start condition to 7:30, and the running end condition to be that an operation of disabling the alarm clock by the user is detected. In this case, when detecting that the current time is 7:30, the electronic device 100 may trigger the alarm clock application widget to start to run, that is, the alarm clock starts alarming, to prompt the user to wake up. After detecting the operation of disabling the alarm clock by the user, the electronic device 100 may disable the alarm clock, that is, the alarm clock application widget ends running.

In some embodiments, after an application widget ends running, the electronic device may notify another application widget in a manner (for example, in a manner of sending a notification or broadcasting), so that the another application widget learns that the application widget has ended running.

In some other embodiments, after an application widget starts to run, the electronic device may notify another application widget in a manner (for example, in a manner of sending a notification or broadcasting), so that the another application widget learns that the application widget has started to run.

In some other embodiments, an application widget does not need to actively notify another application widget after the application widget starts to run and after the application widget ends running, but each application widget may obtain a running status of the another application widget in real time.

Step S702d: Run an AI life application widget 1 (open bedroom curtains).

Step S703d: Run an AI life application widget 2 (start a coffee machine).

For example, the user may set a running start condition of the AI life application widget 1 and the AI life application widget 2 to that the alarm clock application widget ends running. In this case, after it is detected that the alarm clock application widget ends running, the AI life application widget 1 and the AI life application widget 2 may start to run simultaneously, that is, run in parallel. For example, through the AI life application widget 1, the bedroom curtains may be opened, and simultaneously, through the AI life application widget 1, the coffee machine may be started.

Step S704d: Run a navigation application widget (display a navigation route according to a preset destination).

Step S705d: Run a music application widget (play music).

As shown in FIG. 7D, it can be seen that the navigation application widget and the music application widget also run in parallel.

For example, it is assumed that the navigation application widget is provided by an in-vehicle device, and the electronic device 100 is a mobile phone of the user. The user may set a running start condition of the navigation application widget to be that the electronic device 100 establishes a connection to the in-vehicle device (for example, establishes a connection to an in-vehicle Bluetooth), and set a running end condition to be that a south gate of a company is reached. In this case, after it is detected that the electronic device 100 establishes a connection to the in-vehicle device, the navigation application widget starts to run. For example, the navigation route may be displayed based on a destination preset by the user. After it is detected that the user arrives at the south gate of the company, the navigation application widget ends running.

For example, the user may set a running start condition of the music application widget to be that the navigation application widget starts to run, and set a running end condition to be that a south gate of a company is reached. In this case, after it is detected that the navigation application widget starts to run, the music application widget starts to run again, that is, starts to play music. After it is detected that the user arrives at the south gate of the company, the music application widget ends running, that is, stops playing music.

Step S706d: Run an attendance application widget (punch in/out).

For example, the user may set a running start condition of the attendance application widget to be that a south gate of a company is reached. Then, after it is detected that the user reaches the south gate of the company, the attendance application widget starts to run, for example, the user punches in/out.

At this point, all application widgets involved in the life scenario from getting up in the morning to going to work shown in FIG. 7D as examples end running.

It can be seen that by setting an application widget running manner, different application widgets (for example, an application widget provided by a local device and/or an application widget provided by a remote device that establishes a connection to the local device) may be appropriately connected in series, link with each other, and interact with each other, so that the application widgets are changed from single-point separation to multi-level mesh combination. This improves use value and playability of the application widgets, enriches use scenarios of the application widgets, and improves user experience.

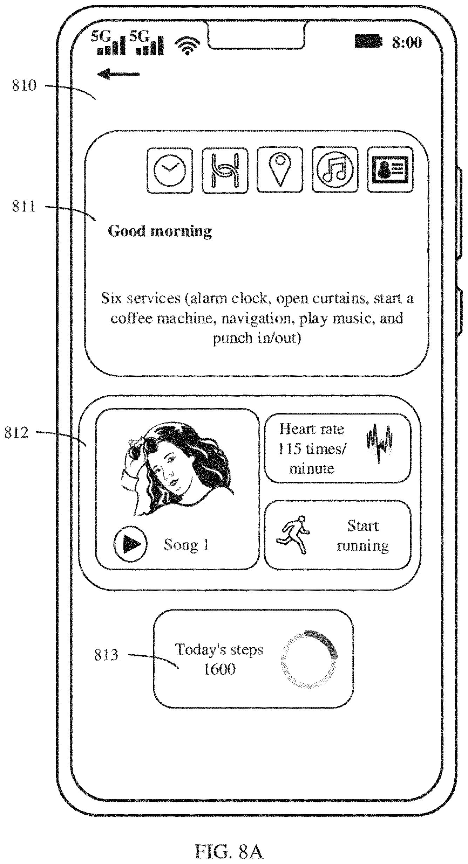

With reference to FIG. 8A to FIG. 8E and FIG. 9A to FIG. 9F, the following describes in detail a specific process in which a user sets a running start condition/running end condition of an application widget.

**(2)** **FIG. 8A to FIG. 8E** **and** **FIG. 9A to FIG. 9F** **show a series of examples of user interfaces in a process of setting a running start condition/running end condition of an application widget.**

Refer to FIG. 8A. After detecting an operation of performing application widget running setting by the user, the electronic device 100 may display a user interface 810 shown in FIG. 8A as an example. The user interface may include one or more composite application widgets and/or atomic application widgets that have been added to a desktop, for example, an application widget 811, an application widget 812, and an application widget 813. It can be seen that the application widget 811 and the application widget 812 are composite application widgets, and the application widget 813 is an atomic application widget. The user may tap one of the application widgets to set a running start condition and a running end condition of the application widget.

The operation of performing the application widget running setting by the user may include but is not limited to the following two types: an operation of the user for the "Service card running settings" option 323 shown in FIG. 3C, or an operation of the user for the "Service card running settings" option 632 shown in FIG. 6D.

In some embodiments, after the user completes the operation of application widget display setting (for example, an operation of tapping the option 365 in FIG. 3I/FIG. 3J/FIG. 3M, or an operation of tapping the option 385 in FIG. 3O), the electronic device 100 may not first add the application widget to the desktop for display, but directly display the user interface 810 shown in FIG. 8A. The user interface may include only the application widget, the user may tap the application widget to set a running start condition/running end condition of the application widget, and after the setting is completed, the application widget is added to the desktop for display.

The following uses the application widget 811 shown in FIG. 8A as an example to describe a specific process of setting a running start condition/running end condition of an application widget.

It is assumed that application sub-widgets included in the application widget 811 that is a composite application widget are all application widgets involved in the foregoing life scenario from getting up in the morning to going to work. To be specific, the application sub-widgets included in the application widget 811 include: an alarm clock application widget (alarm clock), an AI life application widget 1 (open curtains), an AI life application widget 2 (start a coffee machine), a music application widget (play music), a navigation application widget (navigation), and an attendance application widget (punch in/out).

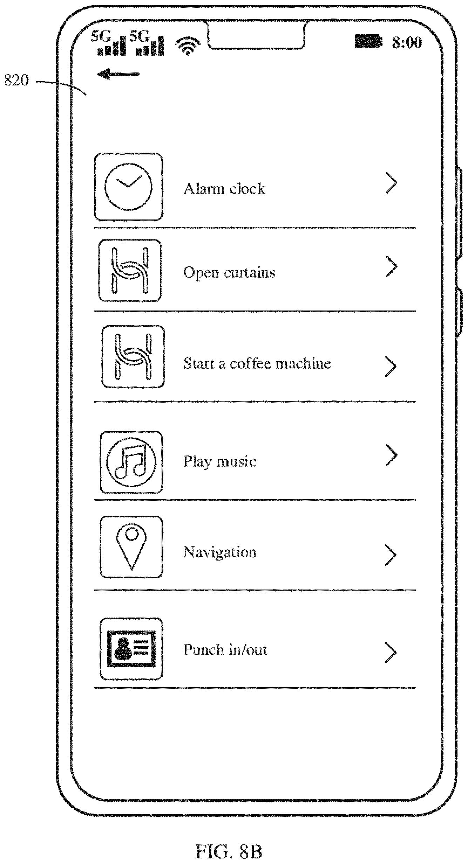

The electronic device 100 may detect an operation (for example, a tap operation) of the user for the application widget 811. In response to the operation, the electronic device 100 may display a user interface 820 shown in FIG. 8B as an example. The user interface may include application widget running setting options (for example, an "Alarm clock" option, an "Open curtains" option, a "Start a coffee machine" option, a "Play music" option, a "Navigation" option, and a "Punch in/out" option) corresponding to all the application sub-widgets that form the application widget 811, and is used for the user to set a running start condition/running end condition of each application sub-widget. The user may tap a corresponding option to set the running start condition/running end condition of each application sub-widget.

In some embodiments, an implementation in which the user triggers to enter the user interface 820 shown in FIG. 8B as an example may be another implementation. For example, if the user touches and holds the application widget 811 on the desktop, the electronic device 100 may display a "Card running settings" option corresponding to the application widget 811 shown in FIG. 4C as an example. The user may tap the option, to enter the user interface 820 shown in FIG. 8B as an example.

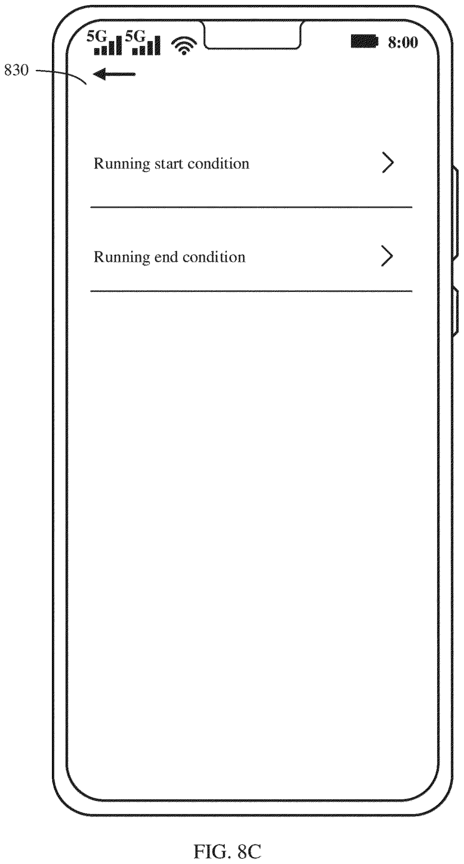

Further, the electronic device 100 may detect an operation (for example, a tap operation for an "Alarm clock" option) of the user for an application widget running setting option corresponding to an application sub-widget shown in FIG. 8B. In response to the operation, the electronic device 100 may display a user interface 830 shown in FIG. 8C as an example. The user interface may include a "Running start condition" setting option and a "Running end condition" setting option, where the "Running start condition" setting option is used to set the running start condition of the application sub-widget (for example, the alarm clock application widget), and the "Running end condition" setting option is used to set the running end condition of the application sub-widget (for example, the alarm clock application widget).

Further, the electronic device 100 may detect an operation (for example, a tap operation) of the user for the "Running start condition" setting option shown in FIG. 8C. In response to the operation, the electronic device 100 may display a user interface 840 shown in FIG. 8D as an example. The user interface may include one or more different types of running start condition setting options (for example, a "Specific time" option, a "Specific location" option, a "Message" option, a "Bluetooth" option, a "Wireless local area network" option, a "Battery status" option, a "Specific state of a device" option, a "Specific operation" option, and a "Specific mode" option). The user may tap one or more setting options to autonomously set one or more running start conditions of the application widget. When one of the running start conditions set by the user is met, the application widget may start to run.

Similarly, the electronic device 100 may also detect an operation (for example, a tap operation) of the user for the "Running end condition" setting option shown in FIG. 8C. In response to the operation, the electronic device 100 may display a user interface 850 shown in FIG. 8E as an example. The user interface may include one or more different types of running end condition setting options (for example, a "Specific time" option, a "Specific location" option, a "Message" option, a "Bluetooth" option, a "Wireless local area network" option, a "Battery status" option, a "Specific state of a device" option, a "Specific operation" option, and a "Specific mode" option). The user may set one or more running end conditions for the application widget. When one of the running end conditions set by the user is met, the application widget may end running.

Refer to Table 1. Table 1 shows an example of a condition for triggering an application widget to start to run/end running. It can be seen from Table 1 that the condition for triggering an application widget to start to run/end running may include the following types: a time type (for example, specific time, a world clock, timing, event time, an alarm clock, and a calendar), a location type (for example, approaching a geographical location, leaving a geographical location, location information, commuting, approaching a device location, and leaving a device location), an active event type (for example, opening another app/tapping a card, and entering a device mode), a passive event type (for example, receiving a message/email/notification, and entering an exercise/sleep state), a weather type (for example, normal weather and disaster weather), a status change type of a local device and a remote device (for example, a Bluetooth connection, a wireless local area network connection, an NFC connection, and a battery status), and a cross-device type (for example, device discovery, a device connection, device disconnection, a device event, and a remote device status). It may be understood that the condition for triggering an application widget to start to run/end running is not limited to the foregoing conditions, and may further include more other conditions. This is not limited in embodiments of this application.

The foregoing conditions for triggering an application widget to start to run/end running may be displayed on the user interface shown in FIG. 8D/FIG. 8E in a form of an option, and the user may tap a corresponding option to perform autonomous setting.

**Table 1**

| | | |
|---|---|---|
| Input event | Time type | Specific time (for example, 12:00) |
| Input event | Time type | World clock (time in a specific time zone) |
| Input event | Time type | Timing (such as timing and countdown) |
| Input event | Time type | Event time (such as sunrise and sunset) |
| Input event | Time type | Alarm clock (for example, an alarm clock starts alarming) |
| Input event | Time type | Calendar (such as birthdays and holidays) |
| Input event | Location type | Approach a geographical location |
| Input event | Location type | Leave a geographical location |
| Input event | Location type | Location navigation and location information (distance) |
| Input event | Location type | Commuting |
| Input event | Location type | Approach a device location |
| Input event | Location type | Leave a device location |
| Input event | Active event type | Open another app or tap a card |
| Input event | Active event type | Enter a mode (for example, an airplane mode, a do not disturb mode, a power saving mode, a silent mode, a vibration mode, or a sleep mode) |
| Input event | Passive event type | Receive a message, an email, or a notification |
| Input event | Passive event type | Enter a sleep state |
| Input event | Passive event type | Enter an exercise state |
| Input event | Weather type | Normal weather (such as a cloudy day, a sunny day, a rainy day, a snowy day, and a haze day) |
| Input event | Weather type | Disaster weather (such as thunderstorm, hail, fog, typhoon, frost, and sandstorm) |
| Input event | Status change of a local device and a remote device | Bluetooth, Wireless local area network, NFC, battery status (for example, a low battery level, power supply connected, fully charged, or a specific battery level), startup, a specific state, or the like |
| Input event | Cross-device type | Device discovery |
| Input event | Cross-device type | Device connection |
| Input event | Cross-device type | Device disconnection |
| Input event | Cross-device type | Device event (for example, a notification) |
| Input event | Cross-device type | Remote device status (for example, a connection status and a battery level) |

First, a specific process of setting a running start condition/running end condition of an application widget is described by using an example in which the running start condition/running end condition of the application sub-widget "alarm clock application widget" of the application widget 811 is to be set.

As shown in FIG. 7D, the running start condition of the alarm clock application widget is 7:30, and the running end condition is that an operation of disabling an alarm clock by the user is detected.

For example, for running start condition (for example, 7:30) setting of the alarm clock application widget, the electronic device 100 may detect an operation (for example, a tap operation) of the user for the "Specific time" option shown in FIG. 8D. In response to the operation, the electronic device 100 may display a user interface 910 shown in FIG. 9A as an example. The user interface may include a time setting area 911 and a frequency setting area 912. The time setting area 911 is used to set running start time of an application widget, and the frequency setting area 912 is used to set a running start date of the application widget. The user may set running start time of the alarm clock application widget to 7:30 a.m. in the time setting area 911, and may further set a running start frequency of the alarm clock application widget in the frequency setting area 912. For example, the user may set that the alarm clock application widget starts to run at 7:30 a.m. every day or on fixed days, or starts to run only at 7:30 a.m. on legal workdays. The user interface 910 may further include an option 913 and an option 914. After completing setting, the user may tap the option 913 and/or the option 914, and the electronic device 100 may save the setting, and return to display the user interface shown in FIG. 8D.

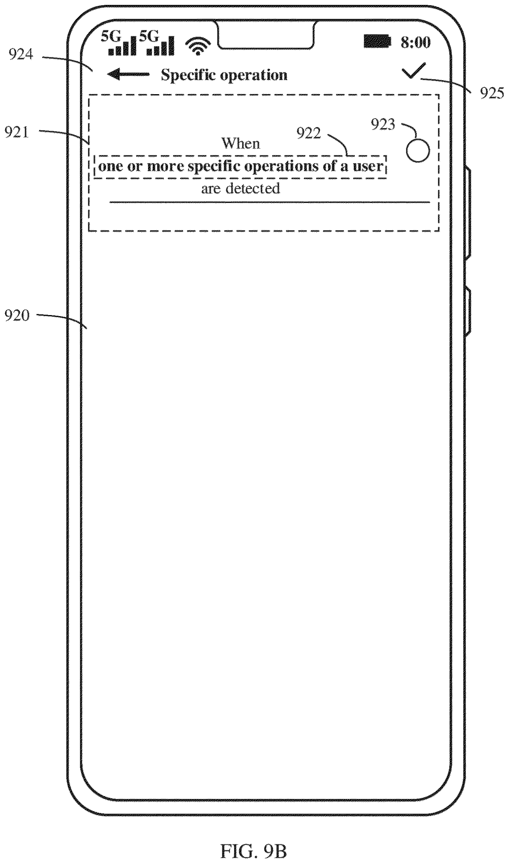

For example, for running end condition (for example, the operation of disabling the alarm clock by the user is detected) setting of the alarm clock application widget, the electronic device 100 may detect an operation (for example, a tap operation) of the user for the "Specific operation" option shown in FIG. 8E. In response to the operation, the electronic device 100 may display a user interface 920 shown in FIG. 9B. The user interface may include one or more setting areas such as a setting area 921. This setting area may include an input box 922 and an option 923, where the input box 922 is used by the user to input a specific operation, and the option 923 is used by the user to select that a running start condition for triggering the application widget is that some operations or a specific operation of the user is detected. The user may enter a specific operation in the input box 922: the operation of disabling the alarm clock by the user, and tap the option 923, to complete setting. This is not limited to manually entering the specific operation. In some embodiments, the electronic device 100 may further provide some preset specific operation options such as an alarm clock disabling option, and the user only needs to tap the option to complete setting. The user interface 910 may further include an option 924 and an option 925. After completing setting, the user may tap the option 924 and/or the option 925, and the electronic device 100 may save the setting, and return to display the user interface shown in FIG. 8E.

In this case, both the running start condition and the running end condition of the alarm clock application widget are set.

Specific processes of setting running start conditions/running end conditions of other application sub-widgets, such as the AI life application widget 1 (open curtains), the AI life application widget 2 (start a coffee machine), the music application widget (play music), the navigation application widget (navigation), and the attendance application widget (punch in/out) of the application widget 811 are similar to that of the foregoing "alarm clock application widget". The following is a brief description.

As shown in FIG. 7D, the running start condition of the AI life application widget 1 is that the alarm clock application widget ends running.

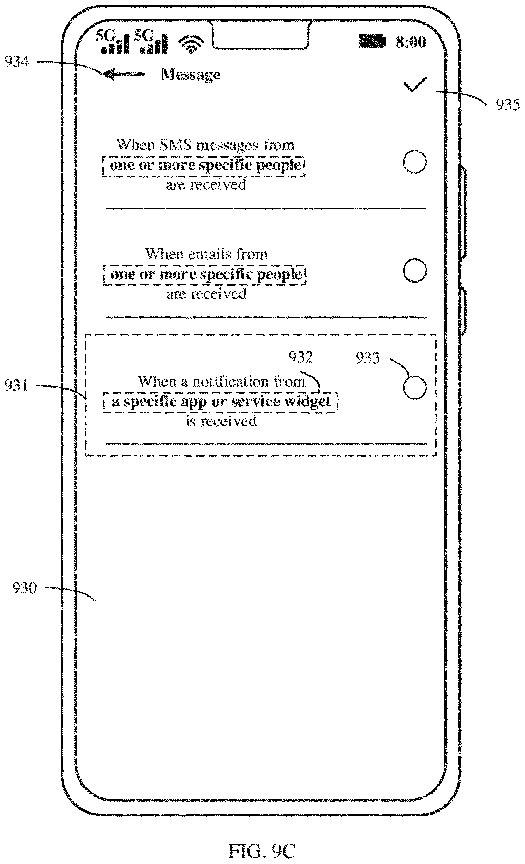

For example, the electronic device 100 may detect an operation (for example, a tap operation) of the user for the "Message" option shown in FIG. 8D. In response to the operation, the electronic device 100 may display a user interface 930 shown in FIG. 9C as an example. The user interface may include one or more setting areas such as a setting area 931. The setting area may include an input box 932 and an option 933. The input box 932 is used by the user to enter a name of an APP/application widget, and the option 923 is used by the user to select that a running start condition for triggering the application is that a notification from an APP/application widget is received. The user may enter the name of the APP/application widget in the input box 932: alarm clock application widget, and tap the option 933 to complete setting. This is not limited to manually entering the name of the APP/application widget. In some embodiments, the electronic device 100 may further provide an option of a name of an available APP/application widget, for example, an alarm clock application widget option, and the user only needs to tap the option to complete setting. The user interface 930 may further include an option 934 and an option 935. After completing setting, the user may tap the option 934 and/or the option 935, and the electronic device 100 may save the setting, and return to display the user interface shown in FIG. 8D.

In this case, the running start condition of the AI life application widget 1 is set.

As shown in FIG. 7D, the running start condition of the AI life application widget 2 is that the alarm clock application widget ends running.

It can be seen that the running start condition of the AI life application widget 2 is the same as the running start condition of the AI life application widget 1. For a specific setting process, refer to the foregoing content. Details are not described herein again.

As shown in FIG. 7D, the running start condition of the navigation application widget is that the electronic device 100 establishes a connection to an in-vehicle device (for example, establishes a connection to an in-vehicle Bluetooth), and the running end condition is that a south gate of a company is reached.

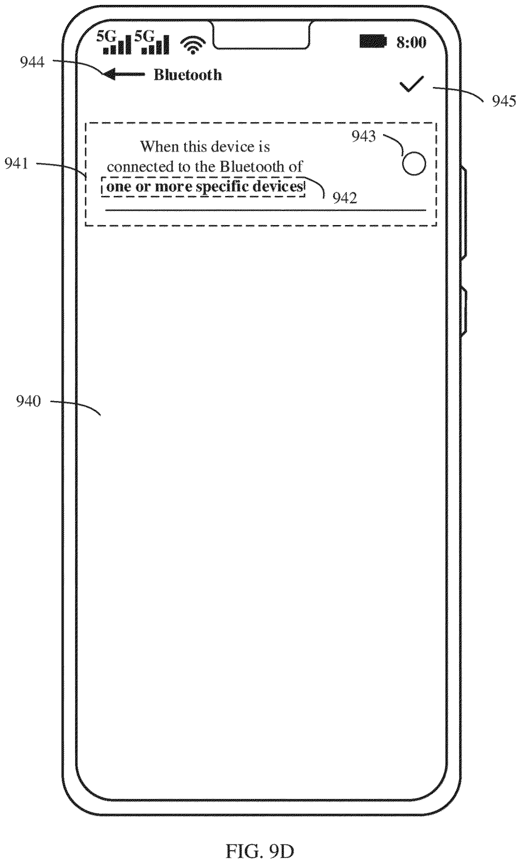

For example, for running start condition (for example, the electronic device 100 establishes a connection to the in-vehicle device) setting of the navigation application widget, the electronic device 100 may detect an operation (for example, a tap operation) of the user for the "Bluetooth" option shown in FIG. 8D. In response to the operation, the electronic device 100 may display a user interface 940 shown in FIG. 9D. The user interface may include one or more setting areas such as a setting area 941. This setting area may include an input box 942 and an option 943. The input box 942 is used by the user to input names of one or more devices, and the option 943 is used by the user to select that a running start condition for triggering the application widget is that a local device (namely, the electronic device 100) is connected to the Bluetooth of the one or more devices. The user may enter names of one or more devices such as head unit XXX in the input box 942, and tap the option 943, to complete setting. This is not limited to manually entering the names of the one or more devices. In some embodiments, the electronic device 100 may further provide an option of names of one or more available devices, and the user only needs to tap the option to complete setting. The user interface 940 may further include an option 944 and an option 945. After completing setting, the user may tap the option 944 and/or the option 945, and the electronic device 100 may save the setting, and return to display the user interface shown in FIG. 8D. In this case, the running start condition of the navigation application widget is set.

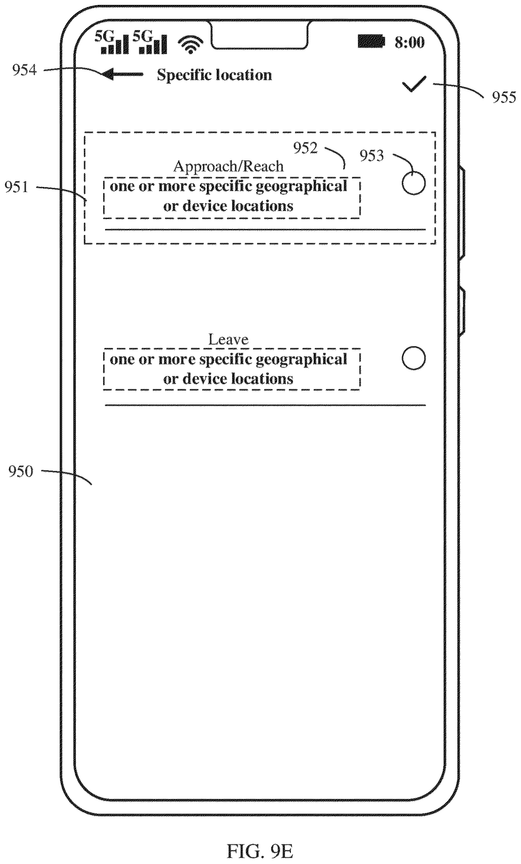

For example, for running end condition (for example, a south gate of a company is reached) setting of the navigation application widget, the electronic device 100 may detect an operation (for example, a tap operation) of the user for the "Specific location" option shown in FIG. 8E. In response to the operation, the electronic device 100 may display a user interface 950 shown in FIG. 9E. The user interface may include one or more setting areas such as a setting area 951. This setting area may include an input box 952 and an option 953, the input box 952 is used by the user to input one or more geographical/device locations, and the option 953 is used by the user to select that a running start condition for triggering the application widget is approaching/reaching one or more geographical/device locations. The user may enter one or more geographical/device locations in the input box 952, for example, a south gate of a company XX, and tap the option 953, to complete the setting. This is not limited to manually entering the one or more geographical/device locations. In some embodiments, the electronic device 100 may further provide, by using a function provided by map software, the user to select the one or more geographical/device locations, to complete setting. The user interface 950 may further include an option 954 and an option 955. After completing setting, the user may tap the option 954 and/or the option 955, and the electronic device 100 may save the setting, and return to display the user interface shown in FIG. 8E.

In this case, both the running start condition and the running end condition of the navigation application widget are set.

As shown in FIG. 7D, the running start condition of the music application widget is that the navigation application widget starts to run, and the running end condition is that a south gate of a company is reached.

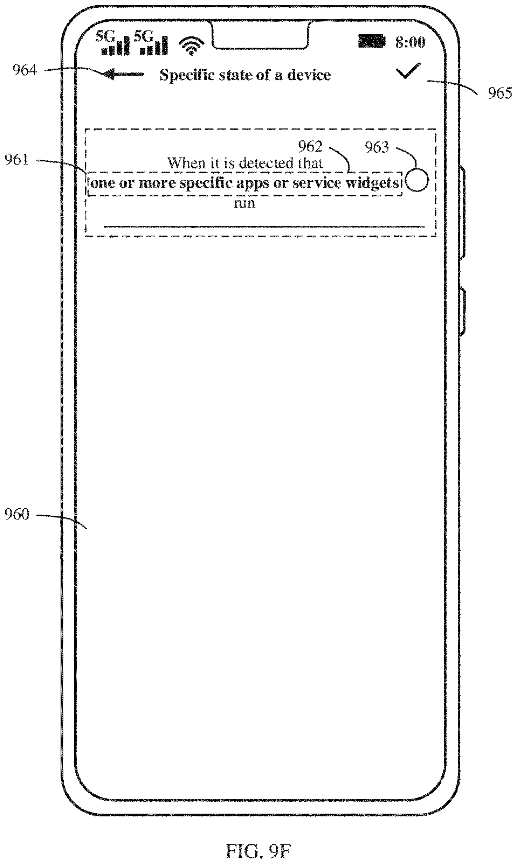

For example, for running start condition (for example, the navigation application widget starts to run) setting of the music application widget, the electronic device 100 may detect an operation (for example, a tap operation) of the user for the "Specific state of a device" option shown in FIG. 8D. In response to the operation, the electronic device 100 may display a user interface 960 shown in FIG. 9F. The user interface may include one or more setting areas such as a setting area 961. This setting area may include an input box 962 and an option 963, the input box 962 is used for the user to input names of one or more APPs/application widgets, and the option 963 is used for the user to select that a running start condition for triggering the application widget is that running of one or more APPs/application widgets is detected. The user may enter names of one or more APPs/application widgets in the input box 962, for example, the navigation application widget, and tap the option 963, to complete setting. This is not limited to manually entering the names of one or more APPs/application widgets. In some embodiments, the electronic device 100 may further provide an option of names of one or more APPs/application widgets, and the user only needs to tap the option to complete setting. The user interface 960 may further include an option 964 and an option 965. After completing setting, the user may tap the option 964 and/or the option 965, and the electronic device 100 may save the setting, and return to display the user interface shown in FIG. 8D.

For running end condition (for example, a south gate of a company is reached) setting of the music application widget, the running end condition of the music application widget is the same as the running end condition of the navigation application widget. Therefore, refer to the foregoing running end condition setting process of the navigation application widget. Details are not described herein again.

In this case, the running start condition and the running end condition of the music application widget are set.

As shown in FIG. 7D, the running start condition of the attendance application widget is that a south gate of a company is reached.

For example, the electronic device 100 may detect an operation (for example, a tap operation) of the user for the "Specific location" option shown in FIG. 8D. In response to the operation, the electronic device 100 may display a user interface 950 shown in FIG. 9E. For a specific process of setting the running start condition of the attendance application widget on the user interface 950, refer to the foregoing process of setting the running end condition of the navigation application widget. Details are not described herein again. After completing setting, the user may tap the option 954 and/or the option 955, and the electronic device 100 may save the setting, and return to display the user interface shown in FIG. 8D.

In this case, the running start condition of the attendance application widget is set.

In some embodiments, after detecting that the user completes running setting of each application sub-widget in the application widget 811, the electronic device 100 may display the running manner of the application widget 811 and the running start condition and the running end condition of each application sub-widget shown in FIG. 7D. In this way, the user can clearly see that the running manner of the application widget 811 is a hybrid running manner, and the running start condition and the running end condition of each application sub-widget. Therefore, the user may be clear about how the application widget 811 specifically runs.

The foregoing content is a possible implementation of setting a running start condition/running end condition of an application widget for the application widget 811 shown in FIG. 8A that is the composite application widget generated in a manner of "combine a plurality of cards into a single card".

However, for the application widget 812 shown in FIG. 8A that is the composite application widget generated in a manner of "arrange a plurality of cards", the foregoing implementation may be used to set the running start condition/running end condition of the application widget, or another implementation may be used. For example, the application widget 812 is displayed on the desktop of the electronic device 100, the user may touch and hold an application sub-widget like the "Song 1" application widget on the desktop, and the electronic device 100 may display the user interface shown in FIG. 4C. The user may tap the "Card running settings" option 413, and the electronic device 100 may display the user interface that is shown in FIG. 8C and that is used to set the running start condition/running end condition of the "Song 1" application widget, to further complete running setting of the "Song 1" application widget. For a specific setting process, refer to the foregoing related content. Details are not described herein again. Similarly, running setting processes of the other two application sub-widgets (namely, the "Heart rate" application widget and the "Start running" application widget) that form the application widget 812 are similar. Details are not described herein again.

For the application widget 813 that is an atomic application widget shown in FIG. 8A, the foregoing two implementations of the application widget running setting for the application widget 812 are applicable to this. Details are not described herein again.

For an atomic application widget that has not been added to the desktop, the user may tap the "Card running settings" option shown in FIG. 5B to enter the user interface shown in FIG. 8C, to further perform application widget running setting on the application widget. Details are not described herein again.

In some embodiments, to simplify user operations, for a plurality of atomic application widgets that are independently displayed on the desktop of the electronic device 100, the user may also connect the plurality of atomic application widgets in series by setting only a running start condition and a running end condition of each atomic application, so that the plurality of atomic application widgets link with each other and interact with each other. A synchronous running manner of an atomic application widget 1 and an atomic application widget 2 is used as an example. After the atomic application widget 1 ends running, the electronic device 100 may send a running end notification to the atomic application widget 2, and a running start condition of the atomic application widget 2 may be set to be that the running end notification from the atomic application widget 1 is received, that is, after the atomic application widget 1 ends running, the atomic application widget 2 starts to run, so that the seemingly independent atomic application widget 1 and atomic application widget 2 may be appropriately connected in series. In this way, the user can appropriately connect the plurality of atomic application widgets in series without a need of first arranging the plurality of application widgets (that is, performing the application widget display setting in Solution 1).

In some other embodiments, to simplify user operations, the user may share, with another electronic device, a composite application widget that completes display setting and running setting, or share the composite application widget with an application market for another user to download and use. In this way, the another user can use the composite application widget without re-performing a display setting operation and a running setting operation.

In some other embodiments, in addition to autonomous setting by a consumer user through the service display setting and service running setting, the composite application widget may be set by a third-party ecosystem manufacturer and/or a third-party application manufacturer in advance, and the consumer user may directly use the composite application widget. This can greatly enrich application widget use scenarios, promote application widget ecosystem construction, and further improve application widget use experience by using an ecosystem capability.

The following describes schematic diagrams of a software architecture and an implementation principle involved in a process of display setting and running setting of an application widget of a local/remote device according to embodiments of this application.

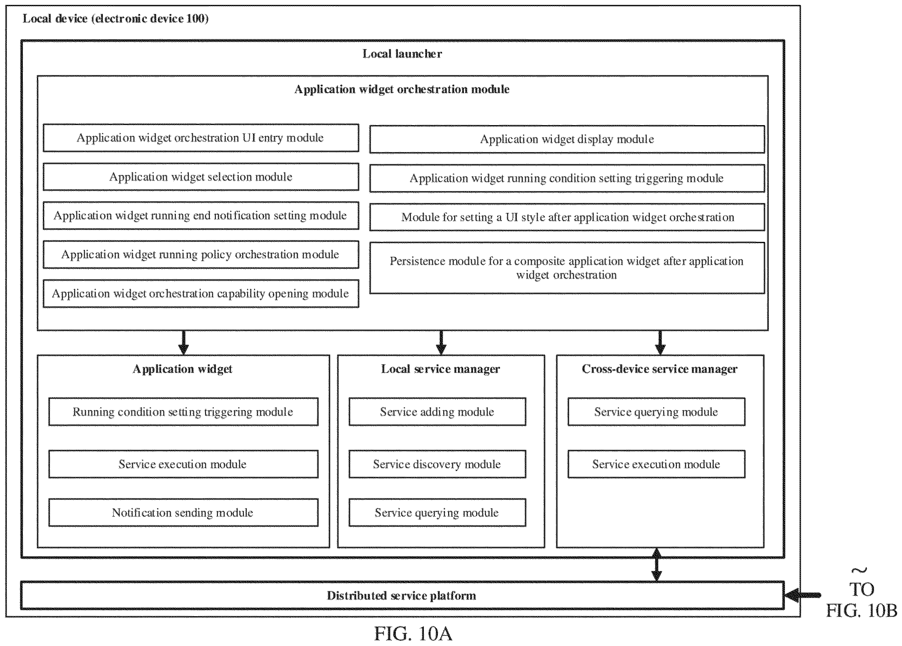

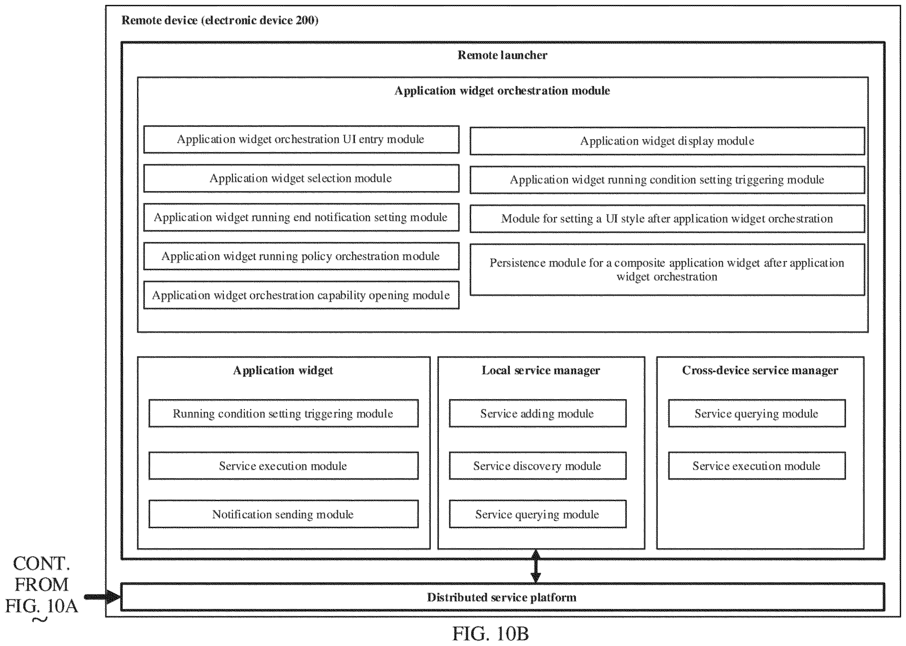

**FIG. 10A** **and** **FIG. 10B** **show an example of a software architecture involved in a process of display setting and running setting of an application widget of a local/remote device according to an embodiment of this application.**

As shown in FIG. 10A and FIG. 10B, the local device (namely, an electronic device 100) may include a desktop (Launcher) application, a distributed service platform, and the like. The desktop application runs at an application layer, and may be configured to: display an application widget on the local device/a remote device that establishes a connection to the local device, and perform display setting and running setting on the application widget on the local device/the remote device that establishes a connection to the local device. The distributed service platform runs at a system service layer, and may be configured to obtain application widget data (for example, UI style data, appearance size data, and function data of an application widget) on the remote device that establishes a connection to the local device.

**The desktop application may include: an application widget orchestration module, an application widget, a local service manager, a cross-device service manager, and the like.**

The application widget orchestration module may include: an application widget orchestration UI entry module, an application widget selection module, an application widget running end notification setting module, an application widget running policy orchestration module, an application widget orchestration capability opening module, an application widget display module, an application widget running condition setting triggering module, a module for setting a UI style after application widget orchestration, a persistence module for a composite application widget after application widget orchestration, and the like.

In this embodiment of this application, "application widget orchestration" may mean application widget display setting and/or application widget running setting.

The application widget orchestration UI entry module may be configured to provide a user interface display entry for application widget orchestration (for example, the user interfaces for entering application widget display setting and running setting shown in FIG. 3A to FIG. 3C).

The application widget selection module may be configured to provide an application widget selection function for a user to select one or more application widgets.

The application widget running end notification setting module may be configured to set content of a notification/broadcast sent to other application widgets after running of the application widget ends, where the content of the notification/broadcast may be preset by a system.

The application widget running policy orchestration module may be configured to provide a capability of orchestrating a running manner (for example, a synchronous running manner, a parallel running manner, or a hybrid running manner) of an application widget.

The application widget orchestration capability opening module may be configured to open an application widget orchestration capability to a third-party ecosystem manufacturer and/or a third-party application manufacturer.

The application widget displaying module may be configured to display atomic application widgets/composite application widgets on the local device/the remote device that establishes a connection to the local device.

The application widget running condition setting triggering module may be configured to provide a running setting function for one or more application widgets, so that the user can set a running start condition and/or a running end condition of a corresponding application widget.

The module for setting a UI style after application widget orchestration is configured to provide one or more UI styles of an application widget for the user to select one of the UI styles of the application widget for display.

The persistence module for a composite application widget after application widget orchestration is configured to store a composite application widget orchestrated by the user.

The application widget may include: a running condition setting triggering module, a service execution module, a notification sending module, and the like.

The running condition setting triggering module may be configured to provide a running setting function of the application widget, so that the user sets a running start condition and/or a running end condition of the application widget.

The service execution module may be configured to provide a running function of the application widget. When the running start condition of the application widget is met, the application widget starts to run, and a service provided by the application widget is executed; and when the running end condition of the application widget is met, the application widget ends running, and the service provided by the application widget ends execution.

The notification sending module may be configured to send a notification/broadcast to notify other applications after the application widget ends running.

The local service manager may include: a service adding module, a service discovery module, a service querying module, and the like.

The service adding module may be configured to add more application widgets to provide more services for the user.

The service discovery module may be configured to provide a function that an application widget on the local device can be discovered by a remote device that establishes a connection to the local device, so that the remote device can further obtain application widget data on the local device. The service discovery module may be further configured to provide a function that the application widget on the local device can be discovered by another application on the local device, so that the another application can further obtain the application widget data on the local device.

The service querying module may be configured to query the application widget on the local device and a service that can be provided by the application widget.

The cross-device service manager may include a service querying module, a service execution module, and the like.

The service querying module may be configured to query an application widget on the remote device that establishes a connection to the local device and a service that can be provided by the application widget.

The service execution module may be configured to: when the application widget on the remote device that establishes a connection to the local device meets a running start condition, indicate the remote device to run the application widget and execute the service provided by the application widget; or when an application widget on the remote device that establishes a connection to the local device meets a running end condition, indicate the remote device to end running of the application widget and end execution of the service provided by the application widget.

It is easy to understand that a software architecture of an electronic device 200 shown in FIG. 10A and FIG. 10B is similar to the software architecture of the electronic device 100. Details are not described herein again.

It may be understood that the software architecture shown in this embodiment of this application does not constitute a specific limitation on the electronic device 100 and the electronic device 200. In some other embodiments of this application, the electronic device 100 and the electronic device 200 may include more or fewer modules than those shown in the figure, or some modules may be combined, or some modules may be split, or different module arrangements may be used.

The following describes a specific procedure in which a local device obtains application widget data from a remote device that establishes a connection to the local device.

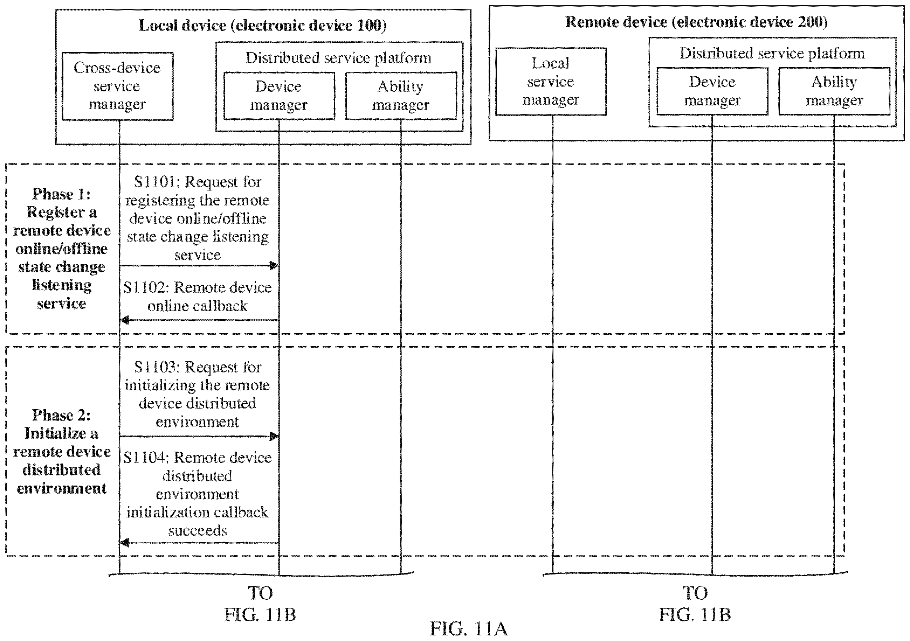

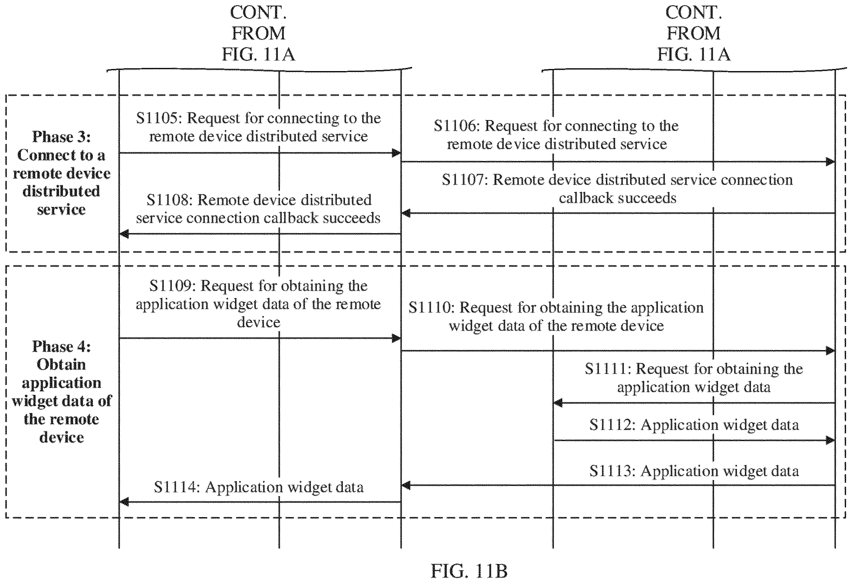

**FIG. 11A** **and** **FIG. 11B** **show an example of a specific procedure in which a local device (namely, an electronic device 100) obtains application widget data from a remote device (for example, an electronic device 200) that establishes a connection to the local device.** The procedure relates to a cross-device service manager, and a device manager (Device Manager) and an ability manager (Ability Manager) in a distributed service platform in the electronic device 100, a local service manager, and a device manager and an ability manager in a distributed service platform in the electronic device 200. Details are described below.

### Phase 1: Register a remote device online/offline state change listening service

The electronic device 100 registers a remote device online/offline state change listening service (registers Device State Callback). A possible implementation may be an implementation described in steps S1101 and S 1102.

S1101: The cross-device service manager of the electronic device 100 sends, to the device manager of the electronic device 100, a request for registering a remote device online/offline state change listening service.

S 1102: The device manager of the electronic device 100 sends a remote device online callback (on Device Online) message to the cross-device service manager of the electronic device 100.

Specifically, after receiving the request for registering the remote device online/offline state change listening service, the device manager of the electronic device 100 may register the remote device (for example, the electronic device 200) online/offline state change listening service. The service is used to listen to an online status and an offline status of the remote device (for example, the electronic device 200).

When it is monitored that the electronic device 200 is in an online state (for example, the electronic device 200 establishes a connection to the electronic device 100), the device manager of the electronic device 100 may send an online callback message of the electronic device 200 to the cross-device service manager of the electronic device 100, to notify the cross-device service manager of the electronic device 100 that the electronic device 200 is in the online state.

### Phase 2: Initialize a remote device distributed environment

The electronic device 100 initializes the remote device distributed environment. A possible implementation may be an implementation described in steps S1103 and S1104.

S1103: The cross-device service manager of the electronic device 100 sends, to the device manager of the electronic device 100, a request for initializing the remote device distributed environment (init Distributed Environment).

The request may carry device information (for example, information such as a device ID) of the electronic device 200, and the device information may be obtained by the electronic device 100 from the electronic device 200 based on the connection established between the electronic device 100 and the electronic device 200.

S1104: The device manager of the electronic device 100 sends, to the cross-device service manager of the electronic device 100, a message indicating that remote device distributed environment initialization callback succeeds.

Specifically, after receiving an online callback message of the electronic device 200, the cross-device service manager of the electronic device 100 may send, to the device manager of the electronic device 100, a request for initializing the remote device distributed environment. After receiving the request, the device manager of the electronic device 100 may initialize the remote device distributed environment. After the initialization is completed, the device manager of the electronic device 100 may send, to the cross-device service manager of the electronic device 100, a message indicating that the remote device distributed environment initialization callback succeeds (on init Success), to notify the cross-device service manager of the electronic device 100 that the remote device distributed environment initialization succeeds.

### Phase 3: Connect to a remote device distributed service

The electronic device 100 is connected to the remote device distributed service (Ability Manager. connect Ability). A possible implementation may be an implementation described in steps S1105 to S1108.

S 1105 and S 1106: The cross-device service manager of the electronic device 100 sends, to the ability manager of the electronic device 100, a request for connecting to the remote device distributed service. After receiving the request, the ability manager of the electronic device 100 may send the request to the ability manager of the electronic device 200.

The request may carry device information (for example, information such as a device ID) of the electronic device 100.

S 1107 and S1108: The ability manager of the electronic device 200 sends, to the ability manager of the electronic device 100, a message indicating that remote device distributed service connection callback succeeds. After receiving the message, the ability manager of the electronic device 100 may send the message to the cross-device service manager of the electronic device 100.

Specifically, after receiving the request for connecting to the remote device distributed service, the ability manager of the electronic device 200 may connect a distributed service ability provided by the electronic device 200 to the electronic device 100, and send, to the ability manager of the electronic device 100, a message indicating that the remote device distributed service connection callback succeeds (On Ability Connect Done). After receiving the message, the ability manager of the electronic device 100 may send the message to the cross-device service manager of the electronic device 100, so that the electronic device 100 successfully connects to the distributed service capability provided by the electronic device 200.

### Phase 4: Obtain application widget data of the remote device

The electronic device 100 obtains the application widget data of the remote device. A possible implementation may be an implementation described in steps S1109 to S1114.

S1109 to S1111: The cross-device service manager of the electronic device 100 sends a request for obtaining the application widget data of the remote device to the ability manager of the electronic device 100. After receiving the request, the ability manager of the electronic device 100 may send the request to the ability manager of the electronic device 200. After receiving the request, the ability manager of the electronic device 200 may send the request to the local service manager of the electronic device 200.

The request may carry device information (for example, information such as a device ID) of the electronic device 100.

S1112 to S1114: The local service manager of the electronic device 200 sends the application widget data to the ability manager of the electronic device 200. After receiving the application widget data, the ability manager of the electronic device 200 may send the application widget data to the ability manager of the electronic device 100. After receiving the application widget data, the ability manager of the electronic device 100 may send the application widget data to the cross-device service manager of the electronic device 100.

Specifically, after the local service manager of the electronic device 200 receives the request for obtaining the application widget data of the remote device, the local service manager of the electronic device 200 may query application widgets provided by the electronic device 200, and send the application widget data to the electronic device 100 through the ability manager of the electronic device 200, so that the electronic device 100 successfully obtains the application widget data on the electronic device 200.

The application widget data may be data of all application widgets provided by the electronic device 200.

The application widget data may include related information of each application widget. The related information may include a widget identifier of the application widget and description information of the application widget, where the widget identifier of the application widget may include a package name and a module name of the application widget. For the package name, for example, com.xxx.xxx.sporthealth may indicate that an application corresponding to the application widget is sports and health, and for the module name, for example, com.xxx.xxx.weather may indicate that the application widget is a weather application widget. The description information of the application widget may include but is not limited to information such as a preview image, a title (such as fitness and health, weather, and a location), and a size of the application widget. Alternatively, the application widget data may include an installation package corresponding to each application widget, and the installation package may be used by the local device to obtain, from the installation package, some information (for example, the widget identifier of the application widget and the description information of the application widget) related to displaying the application widget. After the user adds the application widget to an interface like a desktop or a leftmost screen of the local device for display, when the application widget starts to run, the local device may further obtain, from the remote device, data generated in a process of running the application widget, to display running status information of the application widget.

In some embodiments, steps S 1109 to S1111 are optional. That is, the electronic device 100 may not send the request for obtaining the application widget data of the remote device to the electronic device 200, but the electronic device 200 may send the application widget data on the electronic device 200 to the electronic device 100 in real time, or the electronic device 100 may actively access the application widget data on the electronic device 200 by using the distributed service platform, so that the electronic device 100 may obtain the application widget data on the electronic device 200 in real time. After the electronic device 200 updates the application widget data, the electronic device 100 may obtain updated application widget data in time.

The following describes a schematic diagram of a structure of an electronic device 100 according to an embodiment of this application.

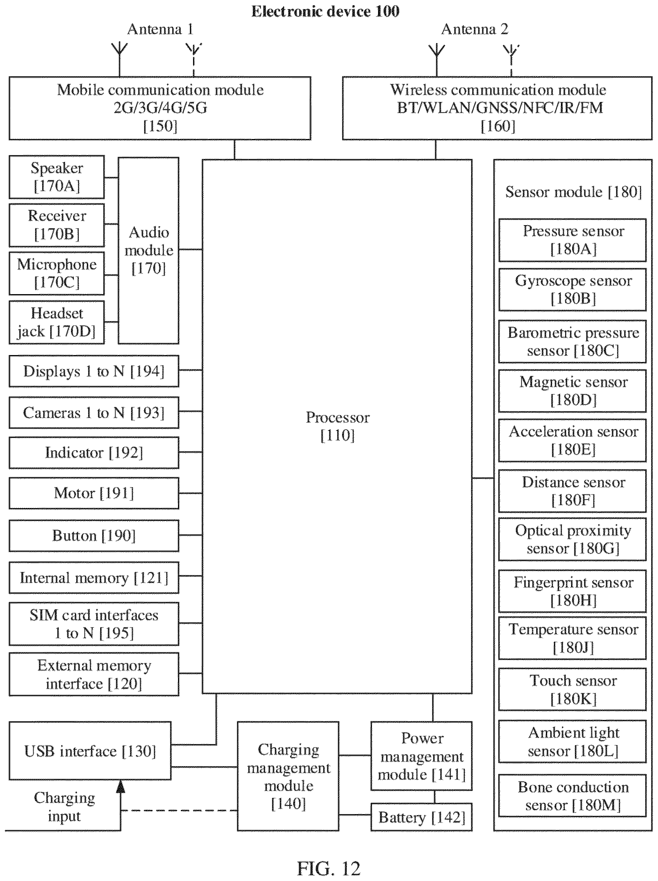

**FIG. 12** **shows an example of a structure of an electronic device 100 according to an embodiment of this application.**

As shown in FIG. 12, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to control instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The I2C interface is a two-way synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through the Bluetooth headset.

The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI interface, to implement a display function of the electronic device 100.

The GPIO interface may be configured by software. The GPIO interface may be configured for a control signal or a data signal. In some embodiments, the GPIO interface may be configured to connect the processor 110 to the camera 193, the display 194, the wireless communication module 160, the audio module 170, the sensor module 180, or the like. The GPIO interface may be alternatively configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to exchange data between the electronic device 100 and a peripheral device, or may be configured to connect to a headset, to play audio through the headset. The interface may be further configured to connect to another terminal device, for example, an AR device.

It can be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from that in the foregoing embodiment, or a combination of a plurality of interface connection manners.

The charging management module 140 is configured to receive charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 by using the power management module 141.

The power management module 141 is configured to connect the battery 142 and the charging management module 140 to the processor 110. The power management module 141 receives an input of the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle quantity, and a battery health status (electric leakage and impedance). In some other embodiments, the power management module 141 may alternatively be disposed in the processor 110. In some other embodiments, the power management module 141 and the charging management module 140 may be alternatively disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may further be multiplexed to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in the same device with the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by using the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, a ray of light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal. In addition to the digital image signal, the digital signal processor may further process another digital signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100, for example, image recognition, facial recognition, speech recognition, and text understanding, can be implemented through the NPU.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 runs the instructions stored in the internal memory 121 to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and a phone book) created during use of the electronic device 100, and the like. In addition, the internal memory 121 may include a high-speed random access memory, and may further include a nonvolatile memory, for example, at least one magnetic disk storage device, a flash storage device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, reduce noise, further identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (Cellular Telecommunications Industry Association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is performed.

The gyroscope sensor 180B may be configured to determine a motion posture of the electronic device 100. In some embodiments, an angular velocity of the electronic device 100 around three axes (namely, axes x, y, and z) may be determined through the gyro sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in navigation and motion sensing game scenarios.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect values of acceleration of the electronic device 100 in various directions (usually on three axes). When the electronic device 100 is still, a magnitude and a direction of gravity may be detected. The acceleration sensor 180E may be further configured to identify a posture of the electronic device 100, and is applied to applications such as a pedometer and switching between a landscape mode and a portrait mode.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be configured to automatically unlock and lock a screen in a flip cover mode and a pocket mode.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a touch panel. The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. Visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse to receive a blood pressure beating signal. In some embodiments, the bone conduction sensor 180M may alternatively be disposed in a headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to produce an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, time reminding, information receiving, an alarm clock, and a game) may also correspond to different vibration feedback effects. A touch vibration feedback effect may further be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into the same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded in the electronic device 100, and cannot be separated from the electronic device 100.

It should be understood that the electronic device 100 shown in FIG. 12 is merely an example, and the electronic device 100 may have more or fewer components than those shown in FIG. 12, or may have two or more components that are combined, or may have different component configurations. Various components shown in FIG. 12 may be implemented in hardware, software, or in a combination of hardware and software that includes one or more signal processing and/or application-specific integrated circuits.

A structure of the electronic device 200 may be the same as or similar to the structure of the electronic device 100. For related content of the structure of the electronic device 200, refer to related text descriptions of the structure of the electronic device 100 shown in FIG. 12. Details are not described herein again.

All or some of the foregoing embodiments may be implemented by software, hardware, firmware, or any combination thereof. When the software is used to implement the foregoing embodiments, all or some of the foregoing embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The storage medium includes any medium that can store program code, for example, a ROM, a random access memory RAM, a magnetic disk, or an optical disc.

The foregoing embodiments are merely intended for describing the technical solutions of this application, but not for limiting this application. Although this application is described in detail with reference to the foregoing embodiments, a person of ordinary skilled in the art should understand that modifications may still be made to the technical solutions described in the foregoing embodiments or equivalent replacements may be made to some technical features, and such modifications or replacements do not cause the essence of the corresponding technical solutions to depart from the scope of embodiments of this application.

## Claims

1. An application widget display method, applied to a first electronic device, wherein the method comprises:
displaying, by the first electronic device, a first user interface, wherein the first user interface comprises a first application widget, and the first application widget is generated by combining at least two application sub-widgets;
detecting, by the first electronic device, a first event; and
when the first event meets a running start condition of a target application sub-widget, triggering, by the first electronic device, the target application sub-widget to start to run, wherein the target application sub-widget comprises at least one of the at least two application sub-widgets.

2. The method according to claim 1, wherein the at least two application sub-widgets comprise a first application sub-widget and a second application sub-widget, the target application sub-widget is the first application sub-widget, and after the triggering, by the first electronic device, the target application sub-widget to start to run, the method further comprises:
triggering, by the first electronic device when the first application sub-widget ends running, the second application sub-widget to start to run.

3. The method according to claim 2, wherein the triggering, by the first electronic device when the first application sub-widget ends running, the second application sub-widget to start to run specifically comprises:
detecting, by the first electronic device, a second event, wherein the second event is that the first application sub-widget ends running, or the second event is an event that triggers the first application sub-widget to end running; and
when the second event meets a running start condition of the second application sub-widget, triggering, by the first electronic device, the second application sub-widget to start to run.

4. The method according to any one of claims 1 to 3, wherein before the detecting, by the first electronic device, a first event, the method further comprises:
detecting, by the first electronic device, an operation of setting the running start condition of the target application sub-widget by a user, obtaining, by the first electronic device, the running start condition of the target application sub-widget that is set by the user through the first electronic device, and storing the running start condition of the target application sub-widget.

5. The method according to any one of claims 1 to 4, wherein after the triggering, by the first electronic device, the target application sub-widget to start to run, the method further comprises:
detecting, by the first electronic device, a third event; and
when the third event meets a running end condition of the target application sub-widget, triggering, by the first electronic device, the target application sub-widget to end running, wherein the target application sub-widget comprises at least one of the at least two application sub-widgets.

6. The method according to any one of claims 1 to 5, wherein the first application widget is generated after the first electronic device combines and arranges the at least two application sub-widgets based on a preset system template, or the first application widget is generated after the first electronic device detects an operation of combining and arranging the at least two application sub-widgets by the user.

7. The method according to claim 6, wherein before the displaying, by the first electronic device, a first user interface, the method further comprises:
displaying, by the first electronic device, a second user interface; and
generating, by the first electronic device, the first application widget after combining and arranging the at least two application sub-widgets on the second user interface based on the preset system template; or
displaying, by the first electronic device, a third user interface; and detecting, by the first electronic device on the third user interface, an operation of dragging the at least two application sub-widgets by the user to combine and arrange the at least two application sub-widgets, and generating, by the first electronic device, the first application widget; and
detecting, by the first electronic device, an operation of adding the first application widget to the first user interface by the user, and displaying, by the first electronic device, the first application widget on the first user interface.

8. The method according to claim 7, wherein before the displaying, by the first electronic device, a second user interface or the displaying, by the first electronic device, a third user interface, the method further comprises:
displaying, by the first electronic device, a fourth user interface, wherein the fourth user interface comprises a plurality of application widgets; and
detecting, by the first electronic device, an operation of selecting at least one application widget in the plurality of application widgets by the user, and displaying, by the first electronic device, the second user interface or the third user interface, wherein
the at least two application sub-widgets comprise the at least one application widget.

9. The method according to claim 8, wherein before the displaying, by the first electronic device, a fourth user interface, the method further comprises:
displaying, by the first electronic device, a fifth user interface; and
in a case that the fifth user interface comprises a plurality of electronic device options, and the plurality of electronic device options comprise an option corresponding to the first electronic device and/or options corresponding to one or more second electronic devices, detecting, by the first electronic device, an operation of the user for at least one electronic device option in the plurality of electronic device options, and displaying, by the first electronic device, the fourth user interface, wherein the fourth user interface comprises an application widget of an electronic device corresponding to the at least one electronic device option; or
in a case that the fifth user interface comprises one or more application options, detecting, by the first electronic device, an operation of the user for at least one application option in the one or more application options, and displaying, by the first electronic device, the fourth user interface, wherein the fourth user interface comprises an application widget corresponding to the at least one application option.

10. The method according to claim 9, wherein before the displaying, by the first electronic device, a fifth user interface, the method further comprises:
displaying, by the first electronic device, one application sub-widget in the at least two application sub-widgets on the first user interface, detecting an operation of performing display setting by the user for the application sub-widget, and displaying, by the first electronic device, the fifth user interface; or
displaying, by the first electronic device, an icon of a first application on a desktop; detecting an operation of the user for the icon of the first application, and displaying, by the first electronic device, one application sub-widget in the at least two application sub-widgets, wherein the application sub-widget corresponds to the first application; and detecting an operation of performing display setting by the user for the application sub-widget, and displaying, by the first electronic device, the fifth user interface; or
detecting, by the first electronic device, a swipe up operation of the user on a desktop, and displaying, by the first electronic device, a sixth user interface; and detecting an operation of triggering application widget display setting on the sixth user interface by the user, and displaying, by the first electronic device, the fifth user interface; or
detecting, by the first electronic device, a two-finger pinch operation of the user on a desktop, and displaying, by the first electronic device, a seventh user interface; and detecting an operation of triggering application widget display setting on the seventh user interface by the user, and displaying, by the first electronic device, the fifth user interface; or
displaying, by the first electronic device, the at least two application sub-widgets on the first user interface, detecting an operation of combining two application sub-widgets in the at least two application sub-widgets by the user, and displaying, by the first electronic device, the fifth user interface.

11. The method according to any one of claims 1 to 10, wherein
the first application widget is displayed in a first display manner, wherein the first application widget comprises at least two sub-interfaces, and the at least two sub-interfaces are respectively interfaces of the at least two application sub-widgets that are combined and arranged; or
the first application widget is displayed in a second display manner, wherein the first application widget comprises icons of one or more applications corresponding to the at least two application sub-widgets, and does not comprise interfaces of the at least two application sub-widgets that are combined and arranged; or
the first application widget is displayed alternately in a first display manner and a second display manner.

12. The method according to any one of claims 1 to 11, wherein
all of the at least two application sub-widgets belong to the first electronic device; or
all of the at least two application sub-widgets belong to the second electronic device; or
some of the at least two application sub-widgets belong to the first electronic device, and some of the at least two application sub-widgets belong to the second electronic device.

13. The method according to any one of claims 1 to 12, wherein
when the target application sub-widget is an application widget of the first electronic device, the triggering, by the first electronic device, the target application sub-widget to start to run specifically comprises: starting, by the first electronic device, to run the target application sub-widget; or
when the target application sub-widget is an application widget of the second electronic device, the triggering, by the first electronic device, the target application sub-widget to start to run specifically comprises: indicating, by the first electronic device, the second electronic device to start to run the target application sub-widget.

14. The method according to any one of claims 1 to 13, wherein the first user interface is the desktop or a leftmost screen.

15. An application widget display method, applied to a first electronic device, wherein the method comprises:
displaying, by the first electronic device, a first user interface, wherein the first user interface comprises at least two application widgets, the at least two application widgets comprise a first application widget and a second application widget, the first application widget is in a running state, and the second application widget is not in a running state; and
triggering, by the first electronic device when the first electronic device triggers the first application widget to end running, the second application widget to start to run.

16. The method according to claim 15, wherein the triggering, by the first electronic device when the first electronic device triggers the first application widget to end running, the second application widget to start to run specifically comprises:
detecting, by the first electronic device, a first event, wherein the first event is that the first application widget ends running, or the first event is an event that triggers the first application sub-widget to end running; and
when the first event meets a running start condition of the second application widget, triggering, by the first electronic device, the second application widget to start to run.

17. The method according to claim 15 or 16, wherein before the triggering, by the first electronic device, the second application widget to start to run, the method further comprises:
detecting, by the first electronic device, an operation of setting the running start condition of the second application widget by a user, obtaining, by the first electronic device, the running start condition of the second application widget that is set by the user through the first electronic device, and storing the running start condition of the second application widget.

18. An application widget display method, applied to a first electronic device, wherein the method comprises:
combining, by the first electronic device, at least two application sub-widgets to generate a first application widget; and
displaying, by the first electronic device, a first user interface, wherein the first user interface comprises the first application widget.

19. The method according to claim 18, wherein the first application widget is generated after the first electronic device combines and arranges the at least two application sub-widgets based on a preset system template, or the first application widget is generated after the first electronic device detects an operation of combining and arranging the at least two application sub-widgets by a user.

20. The method according to claim 18 or 19, wherein before the displaying, by the first electronic device, a first user interface, the method further comprises:
displaying, by the first electronic device, a second user interface; and generating, by the first electronic device, the first application widget after combining and arranging the at least two application sub-widgets on the second user interface based on the preset system template; or
displaying, by the first electronic device, a third user interface; and detecting, by the first electronic device on the third user interface, an operation of dragging the at least two application sub-widgets by the user to combine and arrange the at least two application sub-widgets, and generating the first application widget; and
detecting, by the first electronic device, an operation of adding the first application widget to the first user interface by the user, and displaying, by the first electronic device, the first application widget on the first user interface.

21. A communication system, wherein the communication system comprises a first electronic device and a second electronic device, wherein
the first electronic device is configured to display a first user interface, wherein the first user interface comprises a first application widget, the first application widget is generated by combining at least two application sub-widgets, the at least two application sub-widgets comprise a first application sub-widget, and the first application sub-widget is located in the second electronic device;
the first electronic device is further configured to: when a detected first event meets a running start condition of the first application sub-widget, indicate the second electronic device to start to run the first application sub-widget; and
the second electronic device is configured to start to run the first application sub-widget based on an indication of the second electronic device.

22. An electronic device, wherein the electronic device comprises one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 14, or claims 15 to 17, or claims 18 to 20.

23. A computer storage medium, wherein the computer storage medium stores a computer program, the computer program comprises program instructions, and when the program instructions are run on an electronic device, the electronic device is enabled to perform the method according to any one of claims 1 to 14, or claims 15 to 17, or claims 18 to 20.
